# EUROPEAN PATENT APPLICATION

(11) **EP 4 755 481 A1**
(43) Date of publication of application: **10.06.2026**
(21) Application number: 25220549.7
(22) Date of filing: 03.12.2025
(51) Int. Cl.: A63F 13/355, A63F 13/847, H04N 21/234

(54) **RESOURCE-EFFICIENT PROVISIONING OF MULTI-USER APPLICATIONS**

(30) Priority: 03.12.2024 GB 202417717; 03.12.2024 GB 202417719
(71) Applicant: Sony Interactive Entertainment Inc., Tokyo 108-0075 (JP)
(72) Inventor: STEMPLE, Lloyd Preston, London, W1F 7LP (GB); STARKEY, Robert Christopher, London, W1F 7LP (GB); CLARKE, Jake Leigh, London, W1F 7LP (GB); ANDERSON, Mark, London, W1F 7LP (GB)
(74) Representative: Fish & Richardson P.C.

(57) **Abstract**

Methods, systems, and apparatus for executing the first instance responsive to first input received from a first input device associated with the local processing device, the second instance being responsive to second input received from a second input device associated with the local processing device, determining a first degree of similarity between a first video output of the first instance and a second video output of the second instance, and determining that the first degree of similarity meets or exceeds a threshold degree of similarity and, and at least partially in response, implementing one or more modifications, a first modification including ceasing, by the local processing device, display of one of the first video output and the second video output, and displaying, by the local processing device, another of the first video output and the second video output.

## Description

### CROSS-REFERENCE TO RELATED APPLICATIONS

This application claims the benefit of and priority to UK App. No. 2417712.3, filed on December 3, 2024, and entitled Multiplayer Gaming System and Method, UK App. No. 2417714.9, filed on December 3, 2024, and entitled Multiplayer Gaming System and Method, UK App. No. 2417717.2, filed on December 3, 2024, and entitled Multiplayer Gaming System and Method, and UK App. No. 2417719.8, filed on December 3, 2024, and entitled Multiplayer Gaming System and Method, each of which is incorporated herein by reference in their entireties.

### TECHNICAL FIELD

This specification relates generally to applications, such as video games, and more particularly to multi-user applications, such as multiplayer video games.

### BACKGROUND

Computer-executed applications, such as video games are executed using hardware (processors, memory, network bandwidth) to provide users with immersive and visually rich gaming experiences. Hardware can be provided in the form of desktop computers, laptop computers, tablet computing devices, smartphones, dedicated gaming consoles, and the like. Some applications, such as modem video games provide, among other features, high quality, photo-realistic graphics, audio, integrated artificial intelligence (AI), open gaming worlds, multiplayer integration, and the like. As such, such applications can place a heavy burden on available resources of the underlying hardware.

### SUMMARY

This specification describes systems, methods, devices, and other techniques relating to applications and more particularly to multi-user applications (e.g., multiplayer video games).

In general, innovative aspects of the subject matter described in this specification can include actions of executing the first instance responsive to first input received from a first input device associated with the local processing device, the second instance being responsive to second input received from a second input device associated with the local processing device, determining a first degree of similarity between a first video output of the first instance and a second video output of the second instance, and determining that the first degree of similarity meets or exceeds a threshold degree of similarity and, and at least partially in response, implementing one or more modifications, a first modification including ceasing, by the local processing device, display of one of the first video output and the second video output, and displaying, by the local processing device, another of the first video output and the second video output. Other implementations of this aspect include corresponding systems, apparatus, and computer programs, configured to perform the actions of the methods, encoded on computer storage devices.

These and other implementations can each optionally include one or more of the following features: the first degree of similarity is determined by at least one of comparing image frames of the first video output and the second video output, respectively, the image frames including pairs of image frames associated with aligned timestamps of each of the first video output and the second video output, using information output by each of the first instance and the second instance, the information being indicative of one or more in-application parameters, and using metadata associated with one or more of the first video output and the second video output, the metadata being indicative of content of the first video output and the second video output, respectively; the one or more modifications are implemented further in response to the first degree of similarity meeting or exceeding a threshold degree of similarity for at least a predetermined period of time; a second modification includes overlaying one or more elements of one of the first video output and the second video output for display in another of the first video output and the second video output; the first video output is displayed and the second video output ceases to be displayed in response to the first modification and the one or more elements include an element of the second video output that is displayed in the first video output; a second modification includes one or more of rescaling and up-sampling of one of the first video output and the second video output; actions further includes, after implementing the first modification, determining a second degree of similarity between the first video output of the first instance and the second video output of the second instance, and determining that the second degree of similarity is less than the threshold degree of similarity and, and at least partially in response, displaying, by the local processing device, the first video output and the second video output; the threshold degree of similarity is determined based on content of one or more of the first video outputs and the second video outputs; actions further include identifying one or more conflicting audio elements between a first audio output of the first instance and a second audio output of the second instance and, in response, providing a combined audio output by modifying one or more of the one or more conflicting audio elements, and playing, by the local processing device, the combined audio output; modifying one or more of the one or more conflicting audio elements includes one or more of, removing a conflicting audio element from one of the first audio output and the second audio output, adjusting a volume of a conflicting audio element in one or more of the first audio output and the second audio output, and adjusting a location of a source of the conflicting audio element within an environment of the application represented in the combined audio output; and the combined audio output is generated based on respective priorities associated with each of two or more conflicting audio elements.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A to 1E depict an example progression of establishing a multi-user session for an application in accordance with implementations of the present disclosure.
FIGs. 2-5 depict example processes that can be executed in accordance with implementations of the present disclosure.
FIG. 6 depicts an example representation of synchronizing video output in accordance with implementations of the present disclosure.
FIGs. 7 and 8 depict example processes that can be executed in accordance with implementations of the present disclosure.
FIG. 9 depicts an example representation of modifying video output in response to similarity between instances in accordance with implementations of the present disclosure.
FIGs. 10 and 11 depict example processes that can be executed in accordance with implementations of the present disclosure.
FIGs. 13 and 14 depict example processes that can be executed in accordance with implementations of the present disclosure.
FIG. 15 shows an example of a computing device and associated accessories that can be employed to execute implementations of the present disclosure.

Like reference numbers and designations in the various drawings indicate like elements.

### DETAILED DESCRIPTION

This specification describes systems, methods, devices, and other techniques relating to applications and more particularly to multi-user applications (e.g., multiplayer video games).

Implementations of the present disclosure are described in further detail herein with reference to video games as an example of an implementation to aid in clarity of understanding. However, it is contemplated that the techniques described herein can be equally applied to any other suitable application, in which multiple users are to participate concurrently. This can include, for example, and without limitation, applications such as media applications, for example, such as applications which enable users to access free viewpoint video content - each of a plurality of users can view the content from their own viewpoint, thereby implementing a multi-user arrangement.

To provide context for the subject matter of the present disclosure, and as introduced above, modem video games provide increasingly immersive and visually rich gaming experiences and provide, among other features, high quality, photo-realistic graphics, high-quality audio, integrated artificial intelligence (AI), open gaming worlds, multiplayer integration, and the like. With the increasing complexity and quality of video games, demands on hardware (processors, memory, network bandwidth) correspondingly increase. For example, more powerful and capable hardware can be required to execute video games and/or limits can be placed on the functionality of video games in order to enable video games to be executed under realistic hardware constraints.

With regard to multiplayer gaming, various multiplayer scenarios can be supported and can include, for example, online multiplayer, local area network (LAN) multiplayer, and so-called couch cooperative (co-op). Here, online multiplayer and LAN multiplayer refer to network-based multiplayer scenarios (e.g., online being Internet-based, LAN being LAN-based), in which multiple computing devices (e.g., computers, gaming consoles) of respective users (players) communicate over a network for multiplayer gaming. In such multiplayer scenarios, the users are remote from one another (e.g., each user has their own computing device and display screen).

In contrast, couch co-op refers to a scenario, in which multiple users (players) are proximate to each other, such as sharing the same physical space (e.g., sitting on the same couch, in the same room). For example, all users share the same computing device and can share the same display screen. However, couch co-op increases the burden on technical resources of the computing device. More particularly, the same computing device is burdened with executing multiple instances of a video game, an instance for each player, and integrating and orchestrating inputs to and outputs from the multiple instances to provide the multiplayer experience.

As discussed above, resource-intensive video games can push the limits of available hardware. As such, features of video games, such as multiplayer integration, can be restricted. For example, a video game can limit multiplayer integration (e.g., limit the number of users) or be absent multiplayer integration, because resources of underlying hardware (e.g., a gaming console) are insufficient to enable a certain number of players and/or multiplayer integration as a whole. Such limitations can be imposed by the hardware or by any other appropriate computing arrangement. For example, a video game can be developed on the basis of known hardware capabilities (e.g., known processing, memory, etc. of a particular gaming console) and/or information about average or expected computing power available to users.

Because multiplayer scenarios, such as couch co-op, place a heavier burden on technical resources (e.g., a single computing device managing all instances of the multiple users), video games can be more restrictive than other multiplayer scenarios. For example, a video game can be wholly absent couch co-op (e.g., because the hardware cannot handle more than one instance) or place tighter restrictions (e.g., limit couch co-op to two users, because the hardware cannot handle more than two instances).

In view of the foregoing, implementations of the present disclosure provide systems and methods for resource-efficient provisioning of multi-user integration in video gaming systems. As described in further detail herein, implementations of the present disclosure provide the ability for two or more users to interact with separate game instances through a (same) local device, where one or more of the instances are executed by another (remote) device. This enables a local multiplayer experience, such as couch co-op, to be provided for content (video games), for which this would otherwise not be an option for that local device (e.g., due to technical constraints of the local device, such as limited available processing power and/or memory). At least one of the instances is executed remotely to that local device with a network connection being used to transmit images, audio, and/or data to the local device.

Implementations of the present disclosure are described in further detail herein with non-limiting reference to two users being provided with a multiplayer gaming experience. It is contemplated, however, that implementations of the present disclosure can be realized with any appropriate number of users. For example, in the case that each instance supports four players, two instances could be used to provide an (up to) eight player gaming experience using techniques described herein. Similarly, it is considered that a greater number of instances of a game could be utilized in combination so as to provide a gaming experience for a greater number of players. A combination of the two could also be utilized, in which three or more game instances (each able to support two or more players) are used. In any case, the result is achieved in which more users than would otherwise be able to play a game locally are able to play using a single device despite technical limitations.

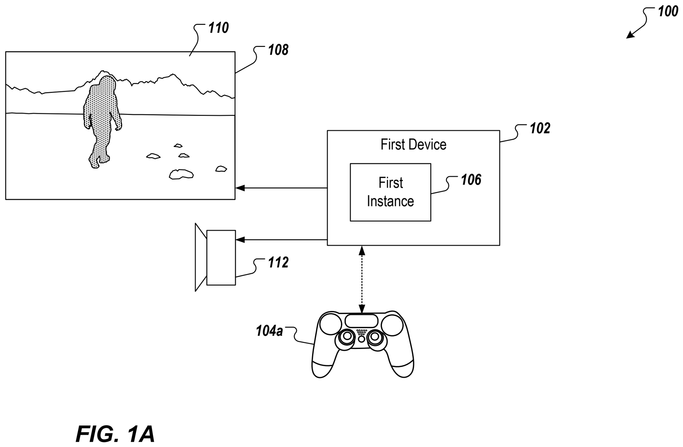

FIGs. 1A to 1E depict an example progression 100 of establishing a couch co-op session in accordance with implementations of the present disclosure.

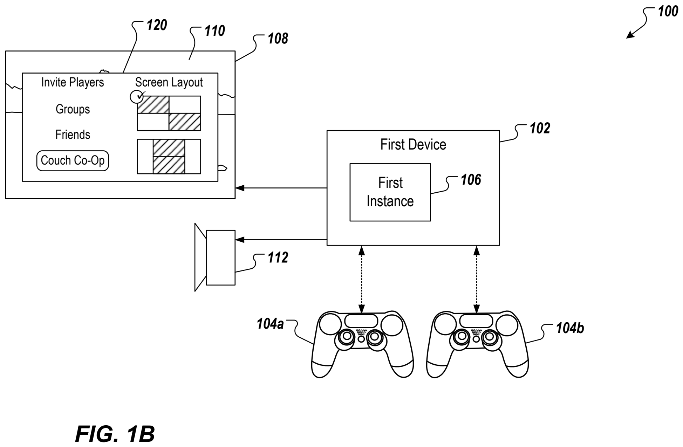

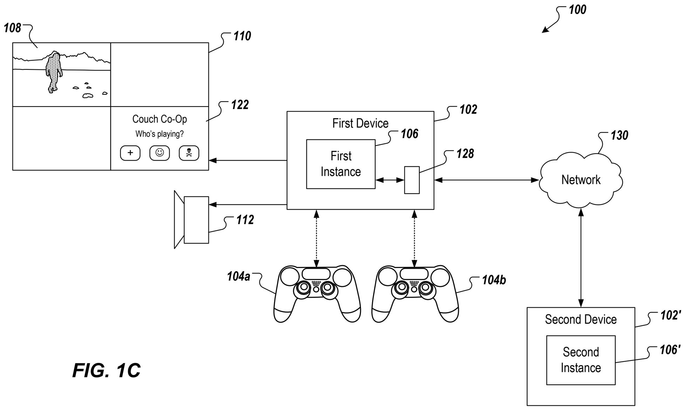

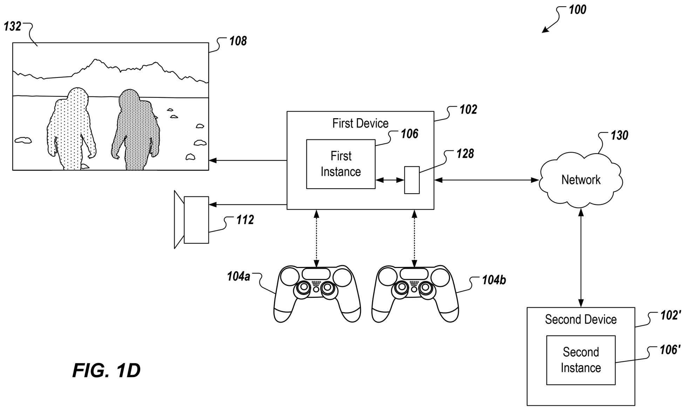

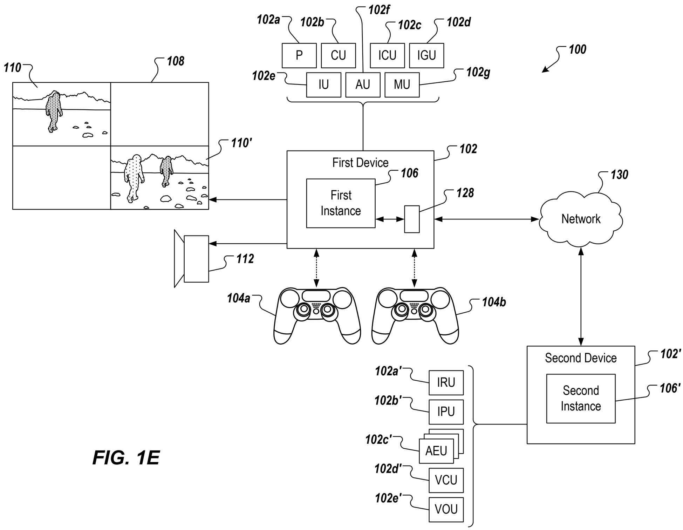

With particular reference to FIG. 1, a first device 102 and a first controller 104a are provided for execution of a video game. In some examples, the first device 102 executes a first instance 106 of the video game and a display 108 depicts first graphics 110 of the video game as generated using the first instance 106. In some examples, audio of the first instance 106 is provided from a speaker 112. In some examples, the first device 102 is considered a local device in that the first device 102 is located proximate to a first user that uses the first controller 104a and that views the first display 108. The first device 102 can be any appropriate computing device that can execute the first instance 106 of the video game (e.g., a gaming console, a smartphone, a desktop computer, a tablet computing device, a server). The example of FIG. 1A can be representative of play of the video game at a time *t*₁.

In accordance with implementations of the present disclosure, it can be determined that a second user is to interact with the first device 102 concurrently with the first user. For example, an indication can be provided to the first device 102 to indicate that the second user is to interact with the first device 102. In some examples, the indication can be provided using the first controller 104a (e.g., the first user can provide input to the first controller 104a indicating that a second user is to interact with the first device 102). In some examples, the indication can be provided using another controller (e.g., input to the other controller can indicate that a second user is to interact with the first device 102).

Referring now to FIG. 1B, which can be representative of a time *t*₂, an interface 120 is displayed that can be used to add one or more second users. In some examples, the interface 120 is displayed in response to the indication that a second user is to interact with the first device 102. In some examples, play of the first instance 106 is paused while the interface 120 is displayed. In some examples, a couch co-op option is selected as well as a screen layout within the interface 120.

In some examples, a second controller 104b is connected (e.g., wired, wireless) with the first device 102 to provide input to and receive output from the first device 102. In some examples, connection of the second controller 104b provides the indication that a second user is to interact with the first device 102, which prompts pause of the play and display of the interface 120. In some examples, the indication is provided prior to connection of the second controller 104b to the first device 102. For example, the second controller 104b can be connected to the first device 102 after display of the interface 120 (e.g., the second controller 104b is connected in response to a prompt displayed in the interface 120).

Referring now to FIG. 1C, which can be representative of a time *t*₃, an invite interface 122 can be displayed to enable selection of a profile of a second user that is to be added. For example, the second user can use the second controller 104b to select a profile from a list of profiles that are available or add a new profile.

In some examples, a coordination module 128 of the first device 102 establishes communication with a second device 102' over a network 130. For example, and in response to a second user being added, the coordination module 128 can transmit a request for connection to a second device. In some examples, the request can be transmitted to a gaming platform (e.g., a cloud-based service). In some examples, in response to the request, a session is established between the first device 102 and the second device 102'.

In accordance with implementations of the present disclosure, the second device 102' can execute a second instance 106' that the second user interacts with using the second controller 104b. In some examples, the second instance 106' can be another instance of the video game of the first instance 106. In some examples, the second instance 106' can be an instance of another, different video game.

In some implementations, the second device 102' can be any appropriate device that can execute the second instance 106' (e.g., a gaming console, a smartphone, a desktop computer, a tablet computing device, a server). In some examples, the second device 102' is considered a remote device in that the second device 102' is located remote from the first controller 104a and the second controller 104b (e.g., such that neither the first controller 104a nor the second controller 104b can directly connect to the second device 102'). By way of non-limiting example, the second device 102' can be located outside of an environment of the first device 102 (e.g., a different room or building). For example, the second device 102' can be provided as a server provided within a cloud-based service.

In some examples, the second device 102' is considered a local device in that the second device 102' is located proximate to the first user and the second user. For example, the second device 102' can belong to one of the first user and the second user interacting with the first device 102. For example, rather than being a device such as a gaming console, the second device 102 can be a smartphone or a tablet computing device of one of the first user or the second user. The second device 102' can be any suitable device for executing the second instance 106' and communicating with the first device 102 over the network 130. Although, in such a case, the second device 102' is considered proximate, the first device 102 is directly coupled to the display 108 for displaying graphics of the first instance 106 and/or the second instance 106'.

Referring now to FIG. 1D, which can be representative of a time *t*₄, the first instance 106 and the second instance 106' are of the same video game. That is, the first user plays the video game using the first controller 104a to interact with the first instance 106 and the second user plays the video game using the second controller 104b to interact with the second instance 106'. The example of FIG. 1D can be representative of a shared scene 132 (e.g., a cutscene) that is displayed over the whole of the display 108. For example, the shared scene 132 of FIG. 1D can be displayed at the onset of play in couch co-op at the time *t*₄.

Referring now to FIG. 1E, which can be representative of a time *t*₅, play in couch co-op is ongoing, in which the first graphics 110 of the video game are displayed from the point-of-view (POV) of the first user within the video game and second graphics 110' of the video game are displayed from the POV of the second user within the video game. More particularly, the display 108 is configured to display images generated by the first device 102 to both the first user and the second user, with the displayed images being dependent upon both the first instance 106 and the second instance 106'.

In some implementations, it can occur that the multiplayer gaming (e.g., couch co-op) is to be initiated while a first instance (e.g., the first instance 106) is ongoing. For example, a first user can play a video game with the first instance, executed by a first device (e.g., the first device 102), processing input from a first controller (e.g., the first controller 104a) of the first user and providing output to a display (e.g., the display 108), a speaker (e.g., the speaker 112), and/or the first controller.

In some implementations, initiation of multiplayer gaming (e.g., couch co-op) can be suggested by the first device based on context. Example context can include, without limitation, detection of an event, such as presence of multiple users. For example, activation of a second controller (e.g., the second controller 104b) can be detected (e.g., from idle, waking up the second controller). In some examples, if activation of the second controller is detected and it is determined that a local game session is ongoing with the first controller active, multiplayer gaming can be initiated. For purposes of non-limiting illustration, reference can be made to FIGs. 1A and 1B, where, at the time *t*₁, a gaming session is ongoing with the first instance 106 executed on the first device. The second controller 104b can be activated and, in response, at the time *t*₂, the interface 120 is displayed to initiate multiplayer gaming (e.g., convert the ongoing single player session to a multiplayer session).

In some implementations, a set of start-up parameters are defined for the local multiplayer experience. For example, the first device (local device) defines the start-up parameters, which can include the presence of devices available to the users at start-up time to define a scope of the adaptability available for the multiplayer experience. Example combinations of devices can include a display and one local device and a display and multiple local devices. In some examples, if only a single local device is available, it can be determined that the multiplayer experience is to use a remote device (e.g., the second instance 106' is executed on the second device 102', which is a server accessed through the network 130). In some examples, if multiple local devices are available, it can be determined that the multiplayer experience is to use the local devices (e.g., the second instance 106' is executed on the second device 102', which is a gaming console accessed through the network 130).

Referring again to FIG. 1E, during multiplayer gaming, the first processing device 102 is configured to receive inputs from each of the first controller 104a and the second controller 104b and to execute the first instance 106. The first device 102 is further configured to output images (e.g., as video game graphics) for display on the display 108 to the first user and the second user. In accordance with implementations of the present disclosure, the images are generated based on both the first instance 106 and the second instance 106'. In some examples, images are generated by the first instance 106 based on data output by the second instance 106'. In some examples, images can be generated by each of the first instance 106 and the second instance 106'. As also described herein, the first device 102 can be configured to output audio for at least one of the first instance 106 and the second instance 106'. In some implementations, this can include outputting audio for each of the first instance 106 and the second instance 106' using a different respective audio channel, such that each of the first user and the second user can be provided with audio for a respective instance. The second device 102' is configured to execute the second instance 106' responsive to inputs from the second controller 104b. In some examples, the inputs of the second controller 104b are transmitted to the second device 102' by the first device 102.

In some implementations, each of the first instance 106 and the second instance 106' is capable of supporting a single player. Consequently, if a third user is to join the multiplayer gaming session of the first user and the second user, a third instance would need to be instantiated and executed by a device. In some examples, the third instance could be executed on the second device 102' along with the second instance 106' (e.g., the second device 102' has sufficient technical resources to execute multiple instances). In some examples, the third instance could be executed on a third device (e.g., the second device 102' has insufficient technical resources to execute multiple instances).

In some examples, it can be considered appropriate to present the video output of each instance in a split-screen mode such that each instance is shown in a spatially distinct manner. This can be achieved by executing the first instance of the video game locally to generate a video output, while decoding video received from the remote device, which includes the output of the second instance. In some examples, the first instance can be updated based on the output of the second instance so as to represent both instances. This can include a shared screen for both players, so that both appear to be within the same game instance - with both avatars appearing within the same camera view, for example. For example, an object in the first instance can move in dependence upon physics simulations performed by the second instance, with the results of those simulations (or movement information for an object, for example) being output by the second instance for use by the first instance.

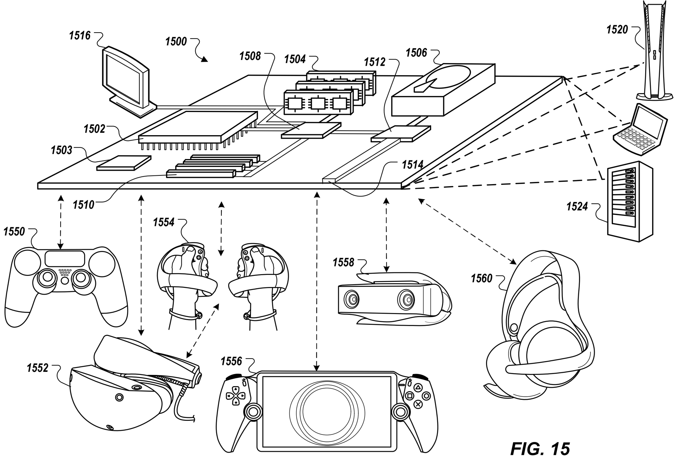

In some implementations, and as depicted in FIG. 1E, the first device 102 includes a processor 102a, a communication unit 102b, an input control unit 102c, an image generation unit 102d, and an identification unit 102e. These functions can be implemented by one or more of a central processing unit (CPU), a graphics processing unit (GPU), and data port. Examples are described in further detail herein with reference to FIG. 15.

The processor 102a of the first device 102 is configured to execute the first instance 106 responsive to inputs received from the first controller 104a (e.g., inputs to control an avatar of the first user within the game environment). In some examples, and as described herein, inputs can include those that enable the second user to join the video game using the second instance 106' (e.g., issuing an invitation to the second user and/or configuring the first instance to 106 to enable other users to join).

In some implementations, the processor 102a is configured to adapt one or more settings of the first instance 106 based on one or more parameters (e.g., video settings) associated with the second instance 106', the output video of the second instance 106' (e.g., provided by the second device 102'), and/or properties of the network connection between the first device 102 and the second device 102'. This can enable the presentation of the first instance 106 to be in keeping with (that is, appearing similar or the same) that of the second instance 106' (or the expected presentation of the second instance 106', in the case that it is not displayed). This can be beneficial in an implementation in which images of both the first instance 106 and the second instance 106' are displayed simultaneously in a split-screen fashion (e.g., as depicted in FIG. 1E). In the case in which only images of the first instance 106 are displayed, this still provides advantages in providing video content that accounts for the display settings of the second instance 106', such as brightness, which can ensure user comfort and content visibility.

The processor 102a can be configured to modify a camera viewpoint associated with the first instance 106 based on an output by the second instance 106'. For example, responsive to data indicating a location of an avatar of the second user in the second instance 106', a camera viewpoint can be adjusted to ensure that both the avatar of the first user and the avatar of the second user are visible in the same image generated from the first instance 106 (e.g., as depicted in the second graphics 110' of FIG. 1E). This can aid an implementation in which a single image is displayed to the users that is representative of the gameplay of all users. In some cases, it is considered that, based upon such data, the output video can be switched between split-screen and a single image in dependence upon a threshold distance between the avatars of the users within the gaming environment, such that when the threshold distance is exceeded the display is changed to a split-screen view.

In some implementations, the processor 102a can be configured to identify a latency associated with receipt of data from the second device 102' (e.g., a latency associated with the network connection and/or a processing time in transmitting inputs from the first device 102 to the second device 102'), and to apply an input latency and/or display latency to the execution of the first instance 106, responsive thereto. In other words, the processing of the first instance 106 can be adapted to provide an equal (or at least similar) latency to that of the second instance 106', so that each user is able to interact with their respective instances in a mutually consistent manner. An input latency refers to delaying the provision of the inputs, whilst a display latency refers to delaying the display of images the users. In some examples, the introduced latency can be a fixed value that is representative of an average or expected latency. In some examples, the introduced latency can be a dynamic value that is responsive to real-time measurement of latency.

The processor 102 can be further configured to adapt settings associated with the first instance 106 and/or instruct adaptation of settings of the second instance 106' so as to manage a local processing load or the like. For example, executing an instance while decoding received video content can place a significant burden on technical resources of a device. In view of this, the video quality of one or more instances can be modified (e.g., reduced) so as to reduce this burden and ensure that processing can be effectively managed.

The communication unit 102b is configured to receive data from a second device 102' through the network 130. In some examples, the data corresponds to the second instance 106' being executed concurrently with the first instance 106. The communication unit 102b can be further configured to perform other communications, such as the transmission of inputs described with reference to the input control unit 102c. In some examples, the communication unit 102b is configured to transmit information to the second device 102 about the initiation of a multiplayer gaming session, such as a location of an avatar of the first user in the gaming environment, or other game state information such as a current stage, user loadout, quest, and the like.

The data corresponding to the second instance 106' can be provided in any suitable format. In some examples, the communication unit 102b is configured to receive data representative of output video of the second instance 106' (optionally with the associated audio). The communication unit 102b can be configured to receive data representing the results of one or more simulations (such as physics simulations for in-game interactions by the second user) performed by the second instance 106', where the results of the one or more simulations are provided to the first instance 106.

The communication unit 102b can be considered optional, as a number of different implementations might not require any communication - such as when multiple instances are executed locally by the processor 102a of the first device 102. In such a case, the multiple instances can be configured to communicate directly without the need for a separate communication unit.

The input control unit 102c is configured to provide inputs received from the first controller 104a to the first instance 106 and to transmit inputs received from the second controller 104b to the second device 102' over the network 130. In some examples, this can be performed by an in-game function associated with the first instance 106 (or a separate game-specific tool that is executed alongside the video game), or it can be handled externally to the game such as by a system-level function provided by an operating system run by the first device 102.

The image generation unit 102d is configured to generate images for display based on both the first instance 106 and the second instance 106', with these images being provided for output to both the first user and second user by the display 108. In some examples, the image generation unit 102d is configured to generate a split-screen image including output video of each of the first instance 106 and the second instance 106'. In some examples, the first instance 106 is used to generate images for display for both the first user and the second user. In some examples, a format is dynamic and is responsive to in-game events or conditions, such as based upon avatar proximity within the game environment, such that, as the users move apart, a split-screen is preferred, or switching to a single screen during cutscenes or the like.

While discussed above with the first instance being executed locally, it is also considered that the first device could be implemented as a thin client or the like that decodes video received from multiple remote game instances. This can be particularly suitable for low-powered devices such as mobile phones or portable gaming consoles. This thin client can include the communication unit 102b, the input control unit 102c, and the image generation unit 120d, while the functionality of the processor 102a is provided remotely (such as by a games console or cloud gaming server). As such, the thin client is configured to receive inputs from the multiple controllers, route the inputs to the respective instances, and receive video that is to be displayed to the users who are local to the thin client.

With continued reference to FIG. 1E, the second device 102' can include an input receiving unit 102a', an input processing unit 102b', a plurality of application execution units 102c', a video compositing unit 102d', and a video output unit 102e'. The functionality of these units may be realized using one or more CPUs and/or GPUs.

The input receiving unit 102a' is configured to receive, from a client device (e.g., the first device 102) a single input stream including input from multiple input devices (e.g., the first controller 104a, the second controller 104b) associated with the client device, each of the input devices being operated by a different user to control a respective instance. As discussed herein, the single input stream can include a plurality of input streams that share a direct memory allocation memory window. It is contemplated, however, that any suitable format can be used (e.g., interleaved frames of input data).

The input receiving unit 102a' can be executed as a standalone unit at the second device 102' (e.g., server), which is configured to communicate with each of the instances being executed. In some examples, a first application execution unit 102c' can provide functionality of the input receiving unit 102a', such that a first instance receives the single input stream. The input stream can then be provided to the input processing unit 102b' by the application.

The input processing unit 102b' is configured to process the single input stream to obtain a plurality of input streams each corresponding to a different input device. In other words, the single input stream is decomposed into the respective input streams that were provided by the users at the client device. Once obtained, the separate input streams can be provided to their respective instances for use in controlling the processing of the corresponding instance. The input processing unit 102b' can be configured to determine a latency between the execution of the respective instances, and to delay the transmission of inputs to one or more of the respective instances based on the latency. For example, if two instances of an application are running with a 10ms latency between them, the input processing unit 102b' can delay transmission of inputs to the leading instance by 10ms to more closely align execution.

The input processing unit 102b' can be executed as a standalone unit at the second device 102' (e.g., server), which is configured to communicate with each of the instances being executed. In some examples, the first application execution unit 102c' can provide functionality of the input processing unit 102b', such that the first instance of the application processes the single input stream.

The plurality of application execution units 102c' are each configured to execute a respective instance of the application based on a corresponding one of the plurality of input streams, wherein each instance generates a respective video output providing a view of that instance of the application.

The application execution units 102c' can be implemented using separate hardware for each instance (such that the application execution units 102c' are each implemented using different CPUs and/or GPUs as appropriate). In some examples, the functionality of more than one application execution unit 102c' can be implemented using the same hardware. The different application execution units 102c' can share any resources as appropriate. For example, the application execution units 102c' can utilize a shared memory for application data.

In some cases, the plurality of application execution units 102c' are implemented using respective compute servers in the same server rack. In some examples, the plurality of application execution units 102c' are instead implemented using the same compute server. In some cases, a plurality of application execution units 102c' can be implemented using a plurality of compute servers in an N to 1 ratio, where N is any number greater than 1. In some examples, the application execution units 102c' can be located in different server racks or different servers altogether. That is, it is not required that the application instances are executed at the same physical location.

The video compositing unit 102d' is configured to generate a single video stream including at least a portion of each of the respective video outputs of the executed instances of the application. This can include cropping or otherwise resizing one or more of the respective video outputs to generate a single video stream suitable for display by the client device. In some examples, other processing can be performed, such as adding borders between the video outputs or to insert content to fill gaps between those outputs (such as a scoreboard or map if there is a space in the single video stream), or applying visual effects such as depth of field or motion blur.

The video compositing unit 102d' can be configured to control the visibility of post-process layers such as UI or HUD elements, which are typically overlaid after the rendering of an image is completed, and so can be implemented as a separate process to that of the rendering. This can be advantageous in that these can be overlaid with more complete knowledge about how the content will be displayed - for instance, a small display size can be identified and UI elements can be scaled up accordingly to preserve their visibility. The placement and other parameters (such as a resolution) can also be managed as a part of this process.

The first application execution unit 102c' can also provide functionality of the video compositing unit 102d', such that the first instance of the application generates the single video stream.

The video output unit 102e' is configured to output the single video stream to the client device, with the client device being configured to obtain, decode, and display the single video stream. The client device can be associated with two or more display devices that each display one of the respective video outputs obtained from the single video stream. In such a case, the client device can be configured to process the obtained single video stream to enable such display.

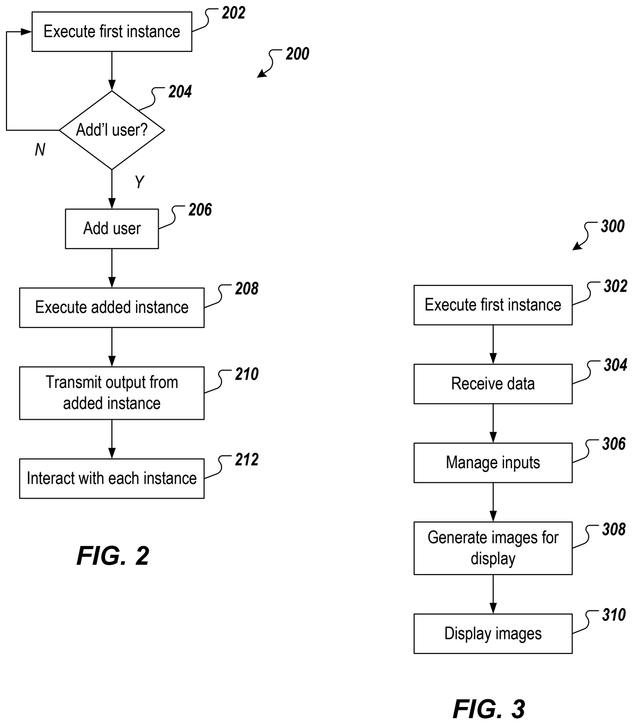

FIG. 2 depicts an example process 200 that can be executed in accordance with implementations of the present disclosure. In some examples, the example process 200 is provided using one or more computer-executable programs executed by one or more computing devices.

A first instance of a game is executed at a local processing device (202). For example, and as described in detail herein with reference to FIG. 1A, the first instance 106 of a video game is executed on the first device 102. In some examples, the first instance 106 is executed in a single player mode, in that only a single player is able to provide inputs to control the execution of the first instance 106 (e.g., through the first controller 104a). It is determined whether an additional user is to be added to the game (204). For example, and as described herein, it can be determined whether an event has occurred (e.g., activating a controller) that indicates that a user is to be added. If it is not determined that a user is to be added, the example process 200 loops back.

If it is determined that a user is to be added, a user is added (206) and an added instance of the game is executed (208). This can be in response to, for example, inputs from the first user of the first instance, a request from the second user, and/or a combination of the two (such as an invitation-based implementation). At this stage, this can include associating a user profile of the second user with the game or inserting their user avatar into a game (e.g., as represented in the example of FIG. 1C). It can be noted that, adding a user is not taken to mean that the additional user is able to directly interact with the first instance. In the case that the second instance is not currently being executed no functionality is initially available to the additional user. For example, and as described herein with reference to FIG. 1C, a request for connection to a second device can be transmitted to a gaming platform (e.g., a cloud-based service) and, in response to the request, a session is established between the first device 102 and the second device 102', which executes the second instance 106'. In some examples, adding a user to the game means that the first instance and the second instance will each provide interactivity with a shared game environment - for instance, meaning that the first user's avatar and the second user's avatar are present in the same game environment (e.g., as depicted in FIGs. 1D and 1E).

Output of the added instance is transmitted (210). For example, output of the second instance 106' is transmitted from the second device 102' to the first device 102 (e.g., over the network 130). In some examples, the output can include any suitable data or content as appropriate for a given implementation. For instance, data regarding a location of an avatar of the second user or interactions may be output, or the results of physics simulations associated with actions of the second user within the second instance can be output to the first device to enable elements of the second instance to be incorporated into those of the first instance. Alternatively, or in addition, the output from the second instance includes video and/or audio of the second instance - such as the rendered video showing interactions of the second user with the second instance. In the case that no video is output by the second instance, execution of the second instance can be modified so as to not render any images - this can reduce a processing burden upon the second device, enabling implementation by a device with reduced processing power and/or improving the energy efficiency of such an arrangement.

Interactions with each instance are executed (212). In some examples, interactions are controlled by users operating respective controllers, each providing input to the first device. In the case of inputs of the second user, these inputs are transmitted to the second device to enable the inputs to be processed using the second instance. The first device is configured to display the results of the interactions with the two separate instances.

FIG. 3 depicts an example process 300 that can be executed in accordance with implementations of the present disclosure. In some examples, the example process 300 is provided using one or more computer-executable programs executed by one or more computing devices. The example process 300 of FIG. 3 represents a multiplayer session, in which a first device (e.g., the first device 102) is configured to receive inputs from each of multiple controllers (e.g., the first controller 104a, the second controller 104b) associated with respective users. Here, a first instance (e.g., the first instance 106) is responsive to inputs received from a first controller, and a second instance (e.g., the second instance 106') is responsive to inputs received from a second controller.

A first instance is executed by the first device (302). For example, the first device 102 executes the first instance 106. Data from a second device is received (304). For example, data from the second device 102' is received by the first device 102 over the network 130. The data is representative of the second instance 106' being executed concurrently with the first instance 106. Inputs received from multiple controllers are managed (306). For example, the first controller 104a and the second controller 104b each provide inputs responsive to physical actions of the first user and the second user, respectively. In some examples, managing the inputs includes providing inputs received from the first controller 104a to the first instance 106 and transmitting inputs received from the second controller 104b to the second instance. Images are generated for display based on the multiple instances (308) and the generated images are displayed (310). For example, the images are displayed to the first user and the second user on the display 108.

When providing content in accordance with implementations of the present disclosure, for example, such that two or more separate instances of applications (e.g., video games) are executed to generate a split-screen multi-user experience, it is considered important that the separate instances are able to remain synchronized. Due to the split-screen nature of the display, a lack of synchronization can be jarring to a user (for instance, if both view the same video content with a time offset from one another) for example, or can cause one of the users to have a competitive advantage when the application is a game. In some cases, there can be a loss of immersion in an application, if users are experiencing events at different times on the same display. In view of this, preserving a synchronized execution of the multiple instances is considered to provide significant advantages.

For purposes of non-limiting illustration, in scenarios, in which two players are playing in a shared game environment through different game instances, reducing latency (or at least causing the respective latencies associated with each instance to be more similar) is desirable. This can enable the two instances to be run in a more consistent manner with respect to one another, thereby, for example, avoiding disadvantaging a user due to a difference in locations of the respective instances, or applications to otherwise be run with a reduced level of synchronicity (which can lead to issues with displaying the applications in split-screen, for example).

One source of latency, which is relevant in this context, is that of input latency introduced above. More particularly, each of the controllers (e.g., the first controller 104a, the second controller 104b) used with the (local) first device (e.g., the first device 102) generates a separate input stream, with these to be provided to respective separate instances (e.g., the first instance 106, the second instance 106'). In some implementations, a single compute process is used to manage the multiple input streams, despite being intended for the control of different instances at different processing devices. This can reduce processing requirements at the first device (versus using a separate compute process to manage each input stream, for example), as well as ensuring that the input streams are handled in the same manner (thereby reducing introduction of latency input streams relative to each other).

Another source of relative latency (that is, the difference in latency associated with each of the instances) and a processing burden is in a scenario in which multiple instances are executed remotely to the first processing device. In this case, compositing the received video streams locally, at the first device, places a significant processing burden on the first device. This can be amplified in the case that the video is high quality (such as 4K) and/or has a high frame rate (e.g., 60 frames per second (FPS), 120 FPS), and/or in the case in which processing is performed on the video content locally. This can include, for example, resizing, up-sampling, and applying other effects. Implementations of the present disclosure manage the manner in which remote-hosted instances (e.g., on the second device) to address video latency issues.

In further detail, in some implementations, a single process is configured to manage resources relating to the multiple instances of the application. In the case that an instance of the application is executed locally (e.g., the instance 106 executed by the first device 102), this instance can be designated as a primary instance and is used to manage resources relating to all instances. For example, the single process can be configured to receive video input of a second instance and perform a video compositing process which can synchronize the video content based upon application data (such as event information which can be identified from the local processing and in the video content independently).

In some examples, in the case that multiple instances are executed remotely at different respective locations (such as a server-based instance and a remote console-based instance), a single process can be executed at the (local) first device, which is configured to manage the respective inputs and received videos.

In the case that multiple instances are executed at the same server, such a single process may be executed by the local processing device or by the server itself. In some examples, processes can be implemented at either end to enable such functionality. In the case that a process is executed at the server that is executing both instances, this can be either as a part of a designated primary instance of the application or as a standalone process which is able to communicate with each instance of the application.

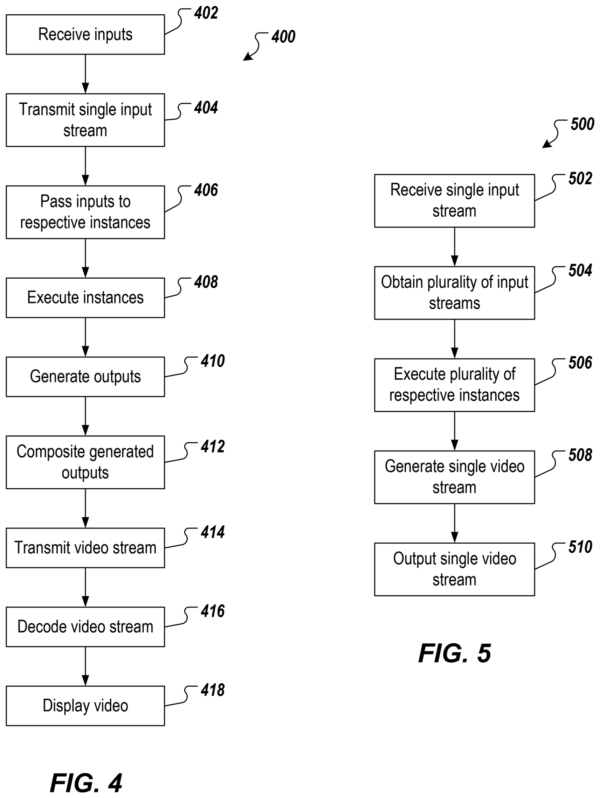

FIG. 4 depicts an example process 400 that can be executed in accordance with implementations of the present disclosure. In some examples, the example process 400 is provided using one or more computer-executable programs executed by one or more computing devices. The example process 400 of FIG. 4 represents a multiplayer session, in which a server executes the multiple instances of an application responsive to inputs received from a local device interacted with by a respective user for each instance. That is, the local device (e.g., a thin client executed on a device) does not itself execute an instance.

Multiple inputs are received (402). For example, the local device receives inputs from multiple controllers and generates a single input stream. Each of the sets of inputs corresponds to a particular user and is received from a respective controller for the control of a corresponding instance of an application. The single input stream is transmitted to the server (404). The single input stream can be configured in any suitable manner, such that the separate input streams corresponding to the respective controllers can be derived from the single input stream. For example, the single input stream can include inputs that share a memory window of direct memory allocation (DMA).

The inputs are passed to respective instances (406). This can be performed by either a standalone process at the server, or by a primary instance executed at the server. In the latter case, the single input stream can be provided to the primary instance (this can be selected arbitrarily - the primary instance is the one configured to perform this processing), which separates the input streams and passes the respective inputs to their corresponding instances. The instances are executed responsive to the corresponding inputs (408). In some examples, each of the instances is executed largely independently with information being passed between the instances to inform the instances of events or the like happening in the other of the instances. In some implementations, it is considered that the users need not be interacting in a multi-user manner - the same advantages can be obtained even if the users are each interacting with an instance entirely independently of one another and simply sharing a display (e.g., playing different video games).

A respective video output is generated based on the execution of each instance (410) and the generated video outputs are composited into a single video stream (412). In some examples, compositing can be performed by the primary instance, should this be defined, or by a separate process hosted by the server. The compositing can be performed in any suitable manner, as appropriate for a given implementation. For instance, in some cases the two video outputs can be transmitted separately within the single stream, such that each can be decoded individually. In some examples, the MPEG container supports supplemental data delivered in synchronization with respective images (frames), which enables combining (multiplexing) video streams into a single logical unit. For decoding, the combined video streams can be de-multiplexed. In some examples, affordances, such as media timed events can be used for any additional synchronization that might be required in multiplexed streams.

In some examples, the two videos can be arranged side-by-side (or in any other configuration) so as to generate a single display video within the stream. This can be performed with knowledge of display conditions at the local device, for example, such as an aspect ratio of a display, an orientation of a display, or other physical display properties, such as DPI or resolution. In the case that the local device is associated with more than one display (such as multiple monitors, or a plurality of head-mountable display devices), such information can be obtained for each of the displays.

Generating outputs and compositing the outputs can be implemented with a view to the manner in which the videos will be displayed by the local device. This can include generating video (or cropping video) to account for the fact that the videos will share a display space - such as generating two videos with an 8:9 aspect ratio rather than a 16:9 aspect ratio, so that the local processing device is not required to resize the video or otherwise make changes to enable their correct display.

The video stream is transmitted to the local device (414) and is decoded (416). In some examples, the received video stream is decoded at the local device and any desired post-processing effects are applied prior to display. Effects can include modifications to the video display, such as color or contrast changes, as well as changing the arrangement of component parts of the video (such as adding an offset or borders to separate the respective video displays). This can include modifications to the display of content on a single display, or over a plurality of displays where appropriate. In the latter case in particular, it may be useful to consider the entire display area associated with the local processing device as a single addressable display space with the processing being configured to assign different parts of the decoded video to respective parts of the display space.

The video is displayed (418). For example, the video is displayed to provide each of the users with a view of their respective instance of the application. In some examples, the video is displayed using a single display. In some examples, the video is split over a plurality of displays, each associated with the same local processing device (such as a pair of displays used with a single computer, with each display showing a different user's instance of the application, or a pair of HMDs associated with a single games console).

By using implementations of the present disclosure in accordance with the example process 400 of FIG. 4, a local processing device can be used to provide multiple users with respective interactive application experiences in a resource-efficient manner. For example, the use of local resources for compute processing is reduced, and the efficiency of data transmission between the device and the server is improved. By linking the inputs and outputs of the respective instances prior to transmission, the relative latency between the instances can be maintained - thereby also offering an improved user experience.

FIG. 5 depicts an example process 500 that can be executed in accordance with implementations of the present disclosure. In some examples, the example process 500 is provided using one or more computer-executable programs executed by one or more computing devices. The example process 500 of FIG. 5 represents a multiplayer session, in which multiple instances are executed by a server responsive to inputs from a single client device.

A single input stream is received (502). For example, the single input stream includes input information from multiple input devices (e.g., controllers) associated with the client device, each of the input devices being operated by a different user to control a respective instance. A plurality of input streams is obtained from the single input stream

(504). In some examples, each input stream corresponds to a respective input device. A plurality of respective instances is executed (506). For example, each instance is executed responsive to a respective input stream of the plurality of input streams and each instance generates a respective video output. A single video stream is generated (508). For example, the single video stream is a combination of at least a portion of each of the respective video outputs of the executed instances. The single video stream is output to the client device (510).

While the above discussion has focused upon an implementation in which both the single input stream and the single video stream are utilized, it should be understood that implementations of the present disclosure are not so limited. This is because, each of these can be implemented independently of one another.

For example, an implementation can be used in which a single input stream is generated by the local processing (client) device and transmitted to a server, but the corresponding video processing is not performed. In some examples, multiple input streams (e.g., multiple inputs from controllers) can be combined into a single input stream using, for example, multiplexing. In some examples, each input stream (e.g., a sub-stream within the single input stream) is tagged (or otherwise identified) (e.g., using metadata) to differentiate it from the other data streams. The server (as part of executing an application or otherwise) can unpack the single input stream into respective input streams, which are provided to corresponding instances. In some examples, the single input stream can be demultiplexed to unpack the respective input stream. Other techniques can be applied, such as, for example, frame packing, timed events, in-band events metadata, and the like, in synchronization with streams. In some examples, the streams can contain multiple different tagged or otherwise individually identifiable substreams with their own type metadata (e.g., video, audio, haptic, input).

In some examples, the instances can provide their respective video streams to the local processing device separately, with the local processing device decoding each video stream and arranging each for display locally. In such an implementation, there can still be a latency reduction and more efficient transmission of inputs, and as such technical benefits are able to be realized independent of the single video stream.

In some implementations, separate input streams can be transmitted by the local processing device to the server. The server can execute each of the instances based on the input streams, with the server generating a single video stream on the basis of the outputs of these application instances. This single video stream can be transmitted to the local processing device for display. In such an implementation, there is still a reduction of the processing burden upon the local processing device as well as an increase in video transmission efficiency. As such, technical benefits are able to be realized independent of the single input stream.

Referring again to latency and synchronization of instances, implementations of the present disclosure provide for synchronization through the detection of events associated with the instances being executed. In some examples, detection of events can be performed by one of the instances (e.g., the first instance 106 executing on the first device 102). In some examples, detecting events can be performed using a separate agent and/or process or a system-level implementation for a respective device. This can be at a device that is local to the users, or can be implemented remotely (e.g., in the case that all instances are hosted by a server).

For purposes of non-limiting illustration, implementations of event detection for synchronization are described in further detail herein with reference to the first device 102 or FIGs. 1A-1E executing the event detection. It is contemplated, however, and as noted above, event detection can be executed by one or more other devices (e.g., the second device 102').

Referring again to FIG. 1E, in some examples, the first device 102 can include the identification unit 102e, an analysis unit 102f, and a modification unit 102g. These functional units can be implemented by a processor (such as a CPU and/or GPU) at the local processing device. In some examples, processing resources at a remote server or a remote processing device can be used - particularly in the case in which the first and second instances of the application are both executed remotely to the local processing device. In some implementations, it is considered that the processing cab be divided between such devices.

In some examples, and as discussed herein, the processor 102a is configured to execute a first instance of the application, the first instance of the application being associated with a first user of the local processing device. In some examples, the application can be associated with the first user by virtue of being executed by that user at a local device, for example, or the first user's account being used when executing the application remotely. In any case, the first instance of the application is controlled by the first user using a corresponding input device.

In some implementations, in which the first instance of the application is executed remotely, but in which other functionality is realized locally, a corresponding communication unit may be configured to output the results of the execution (such as a generated video of the application being interacted with, and any desired metadata or the like) to the local processing device for the subsequent processing to be performed (such as the identification of the synchronization point).

As discussed herein, the communication unit 102b is configured to receive data output by a second instance of the application being executed by a remote processing device, such as a server or a remotely-located equivalent to the first processing device, the second instance of the application being associated with a second user of the local processing device. As above, the second instance of the application is associated with the second user in that it is the inputs provided by the second user (via a corresponding control device) that controls processing of the second instance of the application. This correspondence can be realized using a user account of the second user being logged into the local processing device, for instance, or the control device may be identifiable as belonging to that user.

The received data can include information in any suitable format, which can include video and/or audio associated with the second instance of the application, for example, and/or additional data such as event information, interaction information, and/or the values of one or more in-application parameters identified from the second instance of the application. In the case in which the application is a video game, this can be game state information or parameters such as a character's health, for example, location information for a particular element, or information about actions taken by the character controlled by the second user.

In some examples, the identification unit 102e is configured to identify a synchronization point within the first instance of the application in dependence upon application state data and/or user input data associated with the first user. The synchronization point can be any identifiable time in the processing of the application that can be used to determine whether the two instances of the application are synchronized. For example, if two users are interacting with a media application providing respective views of a football match, an example of a synchronization point is the scoring of a goal or the half time whistle being blown. These events should be identifiable in both instances, and are both associated with an objective time. As such, any time offset between the instances would be able to be identified based on consideration of such events.

In such a case, the synchronization point can be identified as the occurrence of a predetermined event within the first instance of the application. In some examples, this can be predetermined in the sense that it is scripted (such as the appearance of a boss in a game) or predetermined in that the nature of the event is defined in advance (such as the scoring of a goal in a live football match). In some cases, the synchronization point may be identified in response to a cutscene to be reproduced in both the first instance and the second instance of the application. In the case in which multiple synchronization points are identified within a single session of executing the application (which is typical during an extended session, so as to ensure that the synchronization is maintained), each of these methods of identifying a synchronization point can be utilized as desired - it is not necessary that the same approach is used for each identification of a synchronization point.

In some examples, synchronization points can also be identified in response to a predefined period of time having elapsed within the first instance of the application. For example, after an elapsed time the application state of the first instance can be recorded as a synchronization point. As such, synchronization points are determined at regular (or at least known) intervals independent of any particular occurrences in the application. The application state can be recorded based upon data output by the application or can be inferred from the video output (such as identifying visible elements in a given configuration and later seeking this in a video output of the second instance).

In addition to identifying a synchronization point, it can be advantageous to characterize the synchronization point to ensure that the same point is being identified in both instances of the application. For example, if two goals were scored in a football match in quick succession, it would be helpful to identify the scoreline at each point to ensure that the correct goal is being considered for synchronization purposes. To this end, synchronization points can be characterized by the occurrence of an event or interaction within the first instance of the application and/or the values of one or more in-application parameters identified from the first instance of the application. These are effectively parameters within the application that enable similar synchronization points to be distinguished from another, and as such can include any information that is more specific to the user's interactions with the instance than the definition of the synchronization point.

In some examples, synchronization points can be identified on the basis of any suitable information associated with the first instance of the application. For example, the application state data can include an event log, in which the occurrence of an event is considered to represent the state of an application at that time. User input data can be provided by the first instance of the application and can be translated into in-application actions (e.g., user jumped). In some examples, the user input data can be recorded at the time the user provides the inputs to the local processing device. In some examples, this information can be derived from video/audio output associated with the first instance of the application (such that the identification unit 102e can be configured to identify a synchronization point in dependence upon a video and/or audio output associated with the first instance of the application), either using an image recognition process (such as recognizing a particular element being displayed) or a machine learning (ML) model-based process, in which game context can be inferred from video content.

In some examples, the analysis unit 102f is configured to analyze the received data to identify a corresponding synchronization point associated with the second instance of the application, and to calculate a current temporal offset between the first and second instances of the application in dependence upon the respective identified synchronization points. In other words, times of occurrence of a synchronization point is identified in each of the first instance and the second instance and a difference between the times is determined to be the current temporal offset. In some examples, the temporal offset can be determined on the basis of synchronized clocks at each of the respective processing devices. In some examples, the temporal offset can be based upon a clock at the device implementing the analysis unit 102f. In the latter example, this enables the device to determine the relative timing in a manner that accounts for latency due to transmission of the output of the second instance of the application (and in some cases, the first instance of the application should both be executed remotely to the analysis unit 102f). The current temporal offset can be tracked over time, so as to generate a temporal offset history that can be used to determine how stable the temporal offset is, or how it changes over time - this can be used to inform a more appropriate modification selection.

When identifying the corresponding synchronization point in the second instance of the application, any information output by the second instance of the application can be utilized to identify the occurrence of the same event or the same set of parameters (for example). In other words, the information generated by identifying (and optionally characterizing) the synchronization point in the first instance of the application is used to identify a corresponding point in the second instance of the application from the information output by that instance. In the case that video and/or audio is output by the second instance of the application, the analysis unit 102f can be configured to perform a respective processing on the video and/or audio to identify the corresponding synchronization point. This can be implemented as an image search for known events or features within that video content, for example, based upon the information identifying/characterizing the synchronization point. For example, if the synchronization point is based upon an event in which a boss (e.g., a formidable character) appears, the corresponding synchronization point can be identified as the time of an image of that boss appearing in the video output by the second instance of the application.

In some examples, the modification unit 102g is configured to apply a modification to the first instance of the application and/or transmit information regarding a modification of the second instance of the application to the remote processing device (that is, the device executing the second instance of the application). In some examples, the modification is determined in dependence upon the calculated temporal offset and, when applied, the modification causes the temporal offset between the first and second instances of the application to be reduced. In the case that the first instance of the application is executed remotely to the modification unit 102g, the modification unit 102g can transmit information regarding a modification of the first instance of the application to the corresponding processing device.

In some examples, the modification can include increasing or decreasing a speed associated with a given instance of the application, such as causing a game to run at a higher speed. In some examples, the modification can include adding an artificial latency to the execution and/or display of a given instance of the application - this can be implemented by adding an artificial latency to controller inputs, for example, and/or by delaying the display of image frames after the image frames have been received/rendered. In some examples, the modification can include pausing the execution of a given instance of the application for a period equal to the calculated temporal offset. This can enable the other of the instances to 'catch up,' at which point execution of that instance continues normally (or subject to other modifications so as to reduce the chance of losing synchronization again during further execution). The modification can include any appropriate combination of the above examples and/or other examples not specifically discussed herein.

In some examples, the magnitude and/or duration of the modification can be dependent upon the magnitude of the temporal offset. In some examples, an expected rate of change of temporal offset caused by the modification can be considered. For example, it can be preferred that the degree of synchronization is improved within a threshold amount of time (such as a predetermined number of milliseconds) and the magnitude of the offset is determined accordingly. This can balance the desire for the instances to be synchronized with the impact of performing the synchronization - a reduced level of increase in the game speed for a longer period can be preferable to a higher level of increase for a shorter period in respect of its impact upon gameplay, for example. In some examples, a modification is applied only in the case that the temporal offset exceeds a threshold value - a small temporal offset may not be noticeable by a user, and as such it can be more efficient to not apply any modifications in such a case.

In some implementations, the remote processing device can be configured to execute the second instance of the application and to apply a modification to the second instance of the application in response to receiving information regarding a modification of the second instance of the application from, for example, the local processing device.

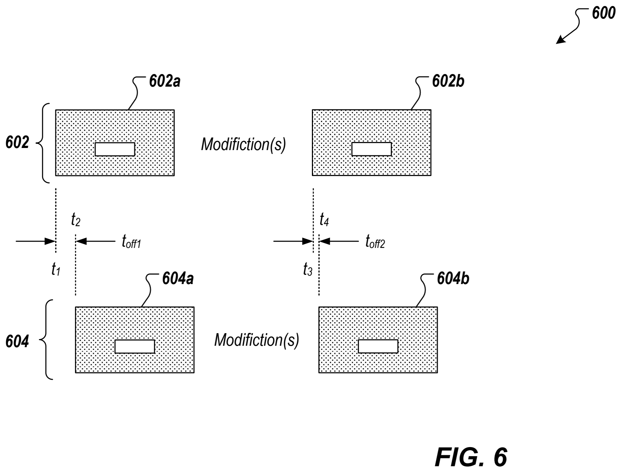

FIG. 6 depicts an example representation 600 of synchronizing video output in accordance with implementations of the present disclosure. It is appreciated that the example representation of FIG. 6 is for purposes of non-limiting illustration and video outputs can be synchronized in various combinations of modification as described herein.

The example of FIG. 6 includes a first video output 602 of a first instance and a second video output 604 of a second instance. The first video output 602 includes frames, such as frames 602a, 602b and the second video output 604 includes frames, such as frames 604a, 604b. In the example of FIG. 6, it can be determined that the frames 602a and the frames 604a correspond to a synchronization point, as described herein. For example, and without limitation, it can be determined that an asset, the same asset (e.g., a boss), appears in the frames 602a and the frames 604a. In response, a first timestamp t₁ of the frame 602a can be compared to a second timestamp t₂ of the frame 604a to determine a temporal offset t_{off1}.

In the example of FIG. 6, it can be determined that the temporal offset t_{off1} meets or exceeds a threshold value and, in response, one or more modifications can be made in an effort to reduce the temporal offset, as described in detail herein. For example, one or more modifications can be made to the first video output 602 and/or one or more modifications can be made to the second video output 604.

In the example of FIG. 6, it can be determined that the frames 602b and the frames 604b correspond to a synchronization point, as described herein. For example, and without limitation, it can be determined that an asset, the same asset (e.g., a boss), appears in the frames 602b and the frames 604b. In response, a third timestamp t₃ of the frame 602b can be compared to a fourth timestamp t₄ of the frame 604a to determine a temporal offset t_{off2}. In the example of FIG. 6, it can be determined that the temporal offset t_{off2} does not meet or exceed the threshold value and, in response, no modification is implemented. That is, the one or more modifications prior to the third timestamp t3 were successful in sufficiently synchronizing the first video output 602 and the second video output 604.

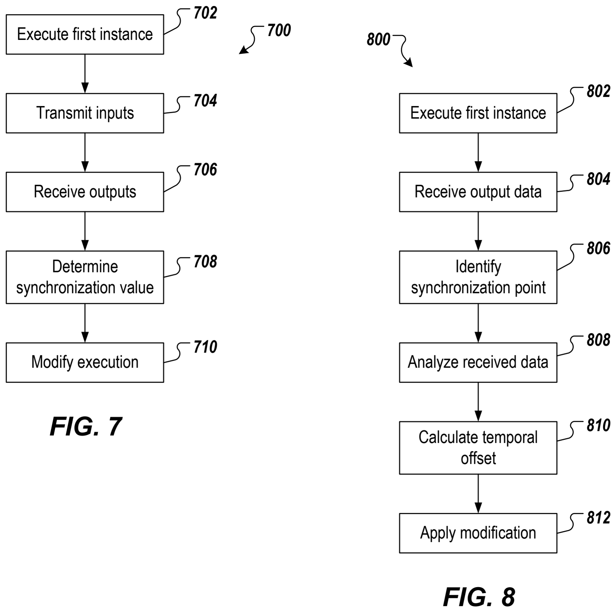

FIG. 7 depicts an example process 700 that can be executed in accordance with implementations of the present disclosure. In some examples, the example process 700 is provided using one or more computer-executable programs executed by one or more computing devices. The example process 700 of FIG. 7 represents modification of one or more instances to improve synchronization therebetween.

A first instance of an application is executed (702). For example, the first instance of the application (e.g., game) is executed at a local processing device (e.g., gaming console), which is a processing device that is interacted with by multiple users using respective control devices (or other inputs, such as gesture-based inputs). The first instance of the application is controlled in dependence upon inputs from a first user, but not controlled in dependence upon inputs from a second user.

Inputs are transmitted (704). For example, inputs provided by the second user (using a second control device) are transmitted to a remote processing device (such as a second gaming console) to control processing of a second instance of the same application as the first instance. The remote processing device is one that is not directly interacted with by a user and can be, for example, located elsewhere in the same space (in that it is remote to the first processing device), or may be located further away (such as in a different room in the same building, or at the home of the second user). The two processing devices can communicate with one another in any suitable manner. This can include over an internet connection, either directly or using a server that acts as an intermediary.

Outputs are received (706). For example, the first processing device receives an output of the second instance of the application from the remote processing device. In some examples, the output can include any suitable information as appropriate for enabling the first instance of the game to incorporate elements from the second instance, as described herein. Further data to assist with determining the degree of synchronization can also be provided as output, such as an event log with timestamps, which can, in some examples, be performed on the basis of the information (such as a video output) that is transmitted.

A synchronization value is determined (708). For example, a synchronization value (that represents a degree of synchronization between instances) is determined between the two instances of the application based upon information about the first instance and the information received about the second instance. In some examples, a relative timing of a start of a cutscene (e.g., a synchronization point) can be determined in the respective instances, comparing a relative timing of an event (e.g., a synchronization point), and/or comparing a relative timing between two identical states. Any appropriate way of determining a synchronization value can also be considered, such as identifying a input of a first user to the first instance and determining a delay before an effect responsive to the input is realized in the second instance. Any appropriate combination of the above examples can be used to determine the synchronization value. Here, the synchronization value can be provided as a time difference, also referred to as a temporal offset, as described herein.

Execution of one or more instances is modified (710). In some examples, execution of one or more of the instances of the application are modified to adjust the synchronization value to increase the degree of synchronization between the instances. That is, the instance(s) is/are modified to reduce any temporal offset between the instances. For example, a speed of one or more instances can be increased/decreased as appropriate. This can increase the speed of the lagging (delayed) instance, reduce the speed of the leading instance, or both with a reduced magnitude. In some cases, the display of video corresponding to the first instance can be delayed (assuming this is the leading game instance), to cause the first instances to be more synchronized with the display of video of the second instance received from the remote processing device.

By implementing such a method, the multiple instances of the application can be presented to the multiple users in a more synchronized manner (that is, with a reduced temporal offset from one another) in an effective and resource-efficient manner despite neither application having a traditional multiplayer implementation.

As introduced above, a ML-based process can be used, in which context can be inferred from video content and is used to identify synchronization points within the second instance of the application without requiring additional data to be provided alongside the video. This can be implemented in any suitable manner based on how the synchronization points are defined.

For example, a machine vision process can be used, in which a ML model has been trained to recognize key elements within images (provided as frames of a video). In some examples, the elements can be a given subset from amongst assets within the application, which are considered to have some significance or at least a given rarity (to enable the assets to be distinguishing among other assets). For example, the ML model can be configured to recognize rare enemies (e.g., a boss), loading screens, effects (such as a screen flash when damage is taken), or any appropriate feature that can be indicative of a particular moment in time. The ML model can be configured to analyze images from both instances, with the respective times of recognition of an element in each being used to determine a temporal offset. For example, an input to the ML model can be an image (frame of an instance) and the output of the ML model can be one or more events and/or assets. In some examples, each event and/or asset is associated with a respective timestamp.

By way of non-limiting example a first image (frame) of a first instance can be associated with a first timestamp and a second image (frame) of a second instance can be associated with a second timestamp. The first image can be processed through a ML model to identify that an asset appears in the first image and the second image can be processed through the ML model to identify that the asset also appears in the second image. As such, the first image and the second image can be used for synchronization. Here, a difference can be determined between the first timestamp and the second timestamp to define a temporal offset. If the temporal offset is less than a threshold temporal offset, it can be determined that the first instance and the second instance are sufficiently synchronized. If the temporal offset meets or exceeds the threshold temporal offset, it can be determined that the first instance and the second instance are insufficiently synchronized, and one or more modifications can be implemented to reduce the temporal offset.

In some implementations, in response to combinations of key elements being identified an event can be identified. For example, this can be trained based on predefined relationships, or from training data that includes videos of a given event that can be processed to determine common elements. Similarly, based un an output of the first instance of the application, the ML model can be configured to search for particular elements rather than identifying any key elements.

In some implementations, a ML model can be used to predict an expected view in the second instance, for example, based on information output by the first instance, or vice-versa. For example, to account for a different viewpoint within the application, different display settings, and/or differences in how events are shown (e.g., if players are on different teams in a game, so events are reported differently as the events can be positive for one player but negative for the other), a ML model can be appropriately trained. In some examples, the ML model is trained using labelled pairs (or larger sets) of videos of the same events occurring in an application being executed in multiple instances. In this manner, during training, the ML model learns how events in a first instance will impact the view in other instances - and therefore corresponding events can be identified and used as synchronization points.

By way of non-limiting example a first image (frame) of a first instance can be associated with a first timestamp and a second image (frame) of a second instance can be associated with a second timestamp. The first image can be processed through a ML model to generate an expected image depicting an expected view for the second instance. The expected image can be compared to a set of images of the second instance. For example, an expected embedding can be generated by processing the expected image through an embedder (e.g., a pretrained embedding ML model) and a set of embeddings can be generated by processing each image in the set of images through the embedder. The expected embeddings can be compared to each embedding in the set of embeddings (e.g., using cosine distance) to determine a set of similarity values, each similarity value representing a degree of similarity between the expected embedding and a respective embedding in the set of embeddings. A highest similarity value is determined and the image corresponding to the image embedding that resulted in the highest similarity value is selected. In this example, it can be determined that the second image resulted in the highest similarity value and is selected (e.g., as a synchronization point). As such, the first image and the second image can be used for synchronization. Here, a difference can be determined between the first timestamp and the second timestamp to define a temporal offset. If the temporal offset is less than a threshold temporal offset, it can be determined that the first instance and the second instance are sufficiently synchronized. If the temporal offset meets or exceeds the threshold temporal offset, it can be determined that the first instance and the second instance are insufficiently synchronized, and one or more modifications can be implemented to reduce the temporal offset.

FIG. 8 depicts an example process 800 that can be executed in accordance with implementations of the present disclosure. In some examples, the example process 700 is provided using one or more computer-executable programs executed by one or more computing devices. The example process 800 of FIG. 8 represents provisioning of a synchronized multi-user application experience at a local processing device.

A first instance of an application is executed (802). For example, the first instance of the application is associated with a first user of a local processing device and is executed by the local processing device. Data output by a second instance of the application is received (804). For example, the second instance of the application is executed by a remote processing device, the second instance of the application being associated with a second user of the local processing device. A synchronization point is identified (806). For example, the synchronization point is identified within the first instance of the application based on application state data and/or user input data associated with the first user. Received data is analyzed (808). For example, the data received from the remote processing device is analyzed to identify a corresponding synchronization point associated with the second instance of the application. A temporal offset is calculated (810). For example, a current temporal offset between the first and second instances of the application is calculated based on the respective identified synchronization points (e.g., as a difference between timestamps of the respective synchronization points). One or more modifications are applied (812). For example, one or more modifications are applied to the first instance of the application and/or to the second instance of the application (e.g., by transmitting information regarding one or more modifications of the second instance of the application to the remote processing device). In some examples, the modification(s) is/are determined based on the temporal offset and, when applied, the modification(s) cause(s) the temporal offset between the first and second instances of the application to be reduced.

When multiple users interact with respective instances of an application in accordance with the above implementations (e.g., couch co-op), it is considered that the users will have an overlap in the respective videos output by the respective instances of the application. In other words, it is considered that at least some of the time the videos displayed for each user would be similar or at least share a number of common elements. An example of this is when playing a game - each of the users can be provided with a view of a cutscene at the same time, or the users can have similar viewports and so have similar views within the game. The users can also view the same HUD elements, for example, such as a map of a game environment or a health bar of a common enemy being faced. Similarly, when viewing free-viewpoint media content, the same scenarios can arise - such as if two users sit next to each other in an immersive sports stadium experience. Displaying such video side-by-side can be distracting to a user in some cases, while the rendering and transmission of duplicated content can be considered to be resource-inefficient. These negative effects are amplified as the number of users increases.

In view of this, implementations of the present disclosure determine similarities between respective video outputs that are to be displayed and can modify one or more of the video outputs to improve resource efficiency of the system and improve user experience.

For example, and as described in further detail herein, a similarity value can be determined for a pair of images, the pair of images including a first image corresponding to video output of a first instance of an application and a second image corresponding to video output of a second instance of the application. In some examples, the similarity value represents a degree of visual similarity between the first image and the second image. For example, the lower the similarity value the more similar the first image and the second image are to each other. The similarity value can be compared to a threshold similarity. If the similarity value does not exceed the threshold similarity, one or more modifications can be applied to the video outputs. As another example, the higher the similarity value the more similar the first image and the second image are to each other. The similarity value can be compared to a threshold similarity. If the similarity value meets or exceeds the threshold similarity, one or more modifications can be applied to the video outputs. In some examples, the modification can include displaying one of the video outputs (e.g., the first image) and not displaying another of the video outputs (e.g., the second image). Multiple other modifications are described in further detail herein.

Implementations can be performed for a range of different arrangements of processing devices, such as those described herein with reference to FIGs. 1A-1E. For example, one or more processing devices described herein can provide a multi-user experience at a local processing device. As noted above, implementations of such a system can be realized with a range of different arrangements of physical processing means (such as CPUs and/or GPUs located in multiple devices). In some examples, a processing device includes a first application processing unit, a second application processing unit, a similarity determining unit, a modification unit, and a display unit.

In some examples, the first application processing unit is configured to execute a first instance of the application responsive to inputs received from the user of a first input device associated with the local processing device. The first application processing unit can be implemented by any suitable arrangement of hardware, such as a CPU and GPU in communication with one another. In some examples, the second application processing unit is configured to execute a second instance of the application responsive to inputs received from the user of a second input device associated with the local processing device, wherein at least one of the first and second application processing units is remote to the local processing device.

In some examples, the first application processing unit is located at the local processing device and the second application processing unit is located at a remote processing device or a server. In some examples, the first application processing unit is located at a remote processing device or a server, and the second application processing unit is also located at a remote processing device or a server. In the latter case, the functionality of the first and second application processing units can be realized by the same server. In the context of the present disclosure, the first and second application processing units execute respective instances of the same application in a multi-user configuration. As such, the specific locations of the instances are able to be selected freely, while the inputs to both are still received by the local processing device shared by the users.

In some examples, the similarity determining unit is configured to determine a similarity value representing a degree of visual similarity between video outputs associated with each of the instances of the application. This can be performed directly by comparing the video outputs themselves (or representations thereof), more indirectly by a comparison of information about the video outputs or their content, or a combination of each.

In some examples, a threshold similarity can be provided. For example, the threshold similarity can be determined based on the content of one or both of the video outputs, such as based upon events that are occurring. For example, the threshold similarity can be lower when there is less action in the video output and higher when there is more action. In some examples, the threshold similarity can be set based on user preferences, a content creator, and/or processing/network capabilities, for example.

In some examples, the similarity determining unit can be configured to compare images (frames) of the respective video outputs to determine a similarity value. In some examples, the images include pairs of images associated with the same display time (timestamps) in each video output. In other words, the images that would be displayed simultaneously can be compared to determine the similarity value.

In one example, an image can be subtracted from another image to determine a residual (wherein a smaller residual indicates a high degree of similarity), edge detection can be performed on each image and the results compared, and/or a ML model can be used to provide a similarity between images (e.g., the pair of images is input to the ML model, which outputs a similarity value).

For example, a first set of images (frames) of a video output of a first instance can be compared to a second set of images (frames) of a video output of a second instance. In some examples, timestamps of images of the first set of images align with (e.g., are equal to, or are within a threshold difference of) timestamps of images of the second set of images. In some examples, a first set of embeddings can be generated by processing the images of the first set of images through an embedder (e.g., a pretrained embedding ML model) and a second set of embeddings can be generated by processing the images of the second set of images through the embedder. The embeddings of the first set of embeddings can be compared to the embeddings of the second set of embeddings (e.g., using cosine distance) to determine a set of similarity values, each similarity value representing a degree of similarity between an embedding of the first set of embeddings and an embedding of the second set of embeddings. In some examples, an aggregate similarity value can be determined (e.g., as an average of the similarity values).

In some examples, the similarity determining unit can be configured to utilize information output by the first and/or second instances of the application to determine a similarity value, the information being indicative of one or more in-application parameters. For example, an in-application parameter can be information about a camera viewpoint associated with the video output, or information about the proximity of the respective viewpoints for each video output. Information about the proximity of two user-controlled avatars in a game is another example, as proximity can be indicative of similar viewpoints (particularly in a third-person game).

In some examples, the similarity determining unit is configured to utilize metadata associated with one or both of the video outputs to determine a similarity value, the metadata being indicative of the content of the respective video output. For example, metadata can indicate the start or end of a cutscene in a game and/or can be used to indicate information about the viewpoint or what is visible in the video. For example, it can be determined that the video outputs are similar, if the same objects (or at least the same significant objects, significance being determined based upon the application) are visible in each.

In some examples, the similarity value is compared to the threshold similarity. In some examples, the modification unit is configured to, in response to the similarity value meeting or exceeding the threshold similarity, cause a video output associated with the first instance or the second instance of the application to no longer be displayed. The selection of which of the instances to no longer display can be made freely based on the specific arrangement of the first and second application processing units and which benefit is sought. This can include, for example, seeking to improve content transmission efficiency and/or to improve battery life of a local processing device. Rather than being limited only to the prevention of display of a particular video output, the modification unit can be configured to modify the display of the remaining video output and optionally the execution of one or both of the instances.

For example, the modification unit can be configured to modify the operation of the instance of the application corresponding to the displayed video output. This can include changing a viewpoint, for example, or generating new UI elements to replace UI elements that would have been displayed in the other of the video outputs. The change in viewpoint can be to broaden the field of view, for example, or to otherwise adjust it so that the viewpoints of the two instances are both well-represented in the displayed video output.

In some examples, the modification unit can be configured to modify the video output to be displayed, the modification can include a rescaling and/or up-sampling of the video output. This change can be motivated by the expected increase in display size of the video to be displayed relative to when two video outputs were each displayed together. Such a change can therefore improve the display quality and/or viewing experience of the users. It is considered that the modification unit can be responsive to user inputs, such that the user is able to adjust the display of content. This can include resizing, reshaping, and/or rearranging content, for example, or selecting/deselecting particular elements for display (such as hiding HUD elements).

In some examples, the modification unit is configured to overlay one or more elements on the video output to be displayed, the elements including one or more outputs of the instance of the application that is no longer to be displayed. For example, the instance of the application that is to no longer have its video output displayed can be configured to output graphical elements representative of aspects of that instance of the application - such as a corresponding user's health bar in a game. These can be overlaid on the video to be displayed either as a part of the execution of the corresponding instance of the application or at the local processing device, for example. One or more audio elements can also be output for reproduction alongside the video output to be displayed as a part of this modification.

In some examples, the modification unit can be configured to operate in response to the (at least) threshold degree of similarity being observed for at least a predetermined period of time. This period of time can be defined as a fixed number of seconds (or fractions of a second), for example, or as a number of successive frames. It can be required that each frame within this period of time exhibits the threshold degree of similarity, or that at least a particular proportion of frames (such as seventy or ninety percent) do so. In some examples, it can be the case that it is required that no more than N successive frames exhibit a below-threshold degree of similarity within that time (N being an integer number of frames).

In some examples, the modification unit can be configured to suspend operation in response to the similarity value not meeting the threshold similarity for at least a predetermined period of time. In other words, should the similarity value no longer meet the threshold similarity the system can return to standard operation in which both the video outputs are displayed without modification. The predetermined period of time can be defined as a fixed number of seconds (or fractions of a second), for example, or as a number of successive frames.

In some examples, the display unit is configured to display a video output associated with the other of the first or second instance of the application at a display device associated with the local processing device. In some examples, there can be multiple display devices associated with a single local processing device. In such examples, the video output can be duplicated for each display or split across those displays as appropriate for a given implementation.

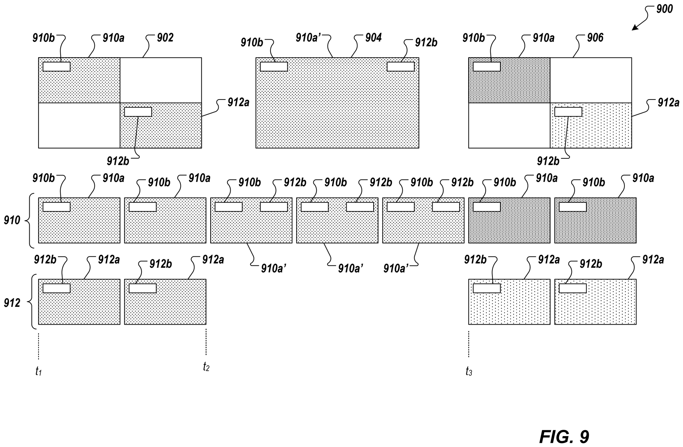

FIG. 9 depicts an example representation 900 of modifying video output in response to similarity between instances. It is appreciated that the example representation 900 of FIG. 9 is for purposes of non-limiting illustration and video output can be modified in various combinations of modification as described herein.

In the example of FIG. 9, a display 902, a display 904, and a display 906 are provided. Each display 902, 904, 906 is a composite display that is displayed to users interacting with respective instances of an application, as described herein (e.g., the display 108 of FIG. 1E). In some examples, the display 902 is displayed from a time t₁ to a time t₂, the display 904 is displayed from the time t₂ to a time t₃, and the display 904 is displayed from the time t₃.

The example of FIG. 9 also includes a first video output 910 of a first instance and a second video output 912 of a second instance. In the example of FIG. 9, the first video output 910 includes a series of frames 910a, 910a' and the second video output 912 includes a series of frames 912a. In some examples, the frames 910a include a first overlay 910b that is specific to a first user of the first instance (e.g., a health status of an avatar of the first user), the frames 910a' include the first overlay 910b and a second overlay 912b that is specific to a second user of the second instance (e.g., a health status of an avatar of the second user). In some examples, the frames 912a include the second overlay 910b.

In some implementations, frames 910a and 912a of the time between t₁ and t₂ can be compared for similarity, as described herein, and it can be determined that the first video output 910 and the second video output 912 are sufficiently similar (e.g., a similarity value meets or exceeds a threshold similarity). In response, it can be determined to implement one or more modifications. In the example of FIG. 9, starting from t₂, one modification includes ceasing use of the second video output 912, another modification includes adding the overlay 912b to the frames 910a' of the first video output 910, and another modification includes displaying the display 904, which includes only the frames 910a' of the first video output 910.

In the example of FIG. 9, frames 910a' and 912a of a time ahead of t₃ can be compared for similarity (e.g., not using the overlays 910b, 912b), as described herein, and it can be determined that the first video output 910 and the second video output 912 are no longer sufficiently similar (e.g., a similarity value does not meet or exceed the threshold similarity). In response, it can be determined to revert the one or more modifications. In the example of FIG. 9, starting from t₃, the second video output 912 is used, the overlay 912b is removed from the frames 910a of the first video output 910, and the display 906 is displayed, which includes the frames 910a of the first video output 910 and the frames 912a of the second video output 912.

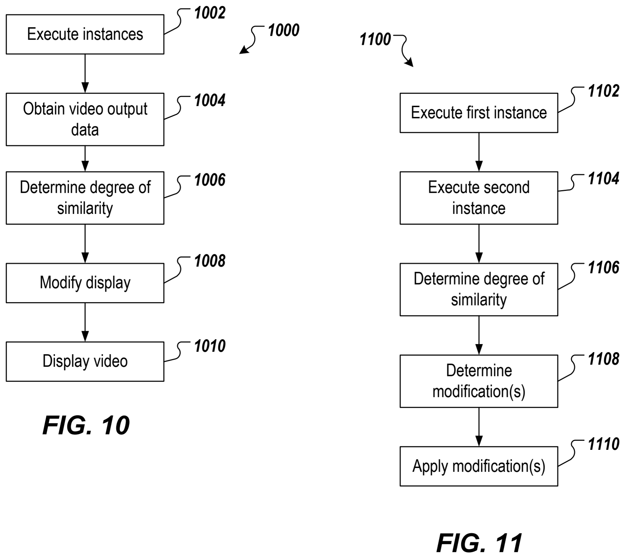

FIG. 10 depicts an example process 1000 that can be executed in accordance with implementations of the present disclosure. In some examples, the example process 1000 is provided using one or more computer-executable programs executed by one or more computing devices. The example process 1000 of FIG. 10 represents using similarities between instances to gain efficiencies in consumption of resources.

Multiple instances of an application are executed (1002). For example, a first instance and a second instance of an application are executed. In some examples, the instances can each be executed by any suitable devices, as described in detail herein. For example, a first instance can be executed at a local processing device and a second instance can be executed remotely (such as at a second processing device associated with a second user, or at a server), or both can be executed remotely.

Video output data is obtained (1004). For example, video output data from each of the first instance and the second instance of the application can be obtained. The video output data can include the video output itself. In some examples, other data that characterizes the video output and/or an application state corresponding to the video output can be obtained. For example, information about the location and orientation of an in-game camera can be obtained, or information indicating the start/end of a cutscene. Information representing common elements between the instance's respective video outputs can also be obtained, such as identifying common HUD elements in a game and optionally values associated with those (such as identifying whether a map being displayed in each instance covers the same area). Such data can be obtained separately to the video, or it can be encoded as metadata alongside the video, for example.

A degree of similarity is determined (1006). For example, a degree of similarity between the video outputs is determined based on the data obtained. This can be performed in any suitable manner for the type(s) of data that is obtained. For example, if the video output itself is obtained, then an image matching process can be used to compare image frames of the respective instances to determine similarity. As another example, if information about a camera position/orientation is obtained, these parameters can be compared to determine a similarity in the resulting view of a virtual environment depicted in the video outputs. As another example, in the case that cutscene start/end information is obtained from each instance, it can be assumed that the threshold is exceeded without further processing (unless it is possible for the cutscenes to be different for each user, of course).

A threshold degree of similarity can be determined in any suitable manner, and defined in accordance with the parameters being considered. A lower threshold can be associated with implementations, in which the desire for processing or transmission efficiency is increased - such as when using a low-powered local processing device, or when a user's internet connection is not entirely reliable. In such cases, the users can be more willing to compromise on a shared viewpoint than they otherwise would be due to the desire for the resulting benefits. Similarly, a higher threshold can be associated with arrangements in which the users are not concerned about efficiency.

In some examples, the threshold can be responsive to user preferences. For example, a shared viewpoint can be displayed in a format that is larger than either of the separate video contents would have been. In view of this, users can be incentivized to allow the viewpoint to be shared with a lower threshold to improve their viewing experience. In some examples, the threshold can be content-specific. For example, some content more readily lends itself to a shared viewpoint (such as a third person cooperative game, in which users are likely to be near each other), while other content is less so (such as a first person game). Some content can also be prone to errors - such as in a driving game, whereby the scenery viewed by both players can be similar despite the viewpoints being far apart, or in a game in which small differences in viewpoint can lead to significantly different views.

Display of respective video outputs is modified (1008) and a video is displayed (1010). In some examples, the display of the respective video outputs is modified in response to at least a threshold degree of similarity being identified between the instances. In some examples, a modification can include not displaying one of the video outputs. This can be performed by the local processing device. In some examples, this can be effected before the local processing device receives the video outputs. For example, the modification can include only transmitting one of the video outputs, thereby improving transmission efficiency. As another example, generation of one of the video outputs can be foregone, thereby improving processing efficiency.

In the case that one of the video outputs is not displayed by the local processing device, the other of the video outputs (i.e., the video output that is to be displayed) can be modified to account for this. For example, the display size can be increased and/or the aspect ratio can be modified to make use of the space that would otherwise have been occupied by the video output no longer being displayed. This can be achieved by modifying the video output directly and/or by modifying one or more parameters within the application to cause video output to be generated with the desired parameters. In the case that multiple display devices are used to display the video content at the local processing device (such as a dual-monitor setup, or each user wearing a respective HMD), the other video output can be duplicated and optionally modified where appropriate to enable its display on the other of the display devices.

In some cases, the execution of one or more instances of the application can be modified in response to determining that one of the video outputs is not to be displayed. For example, the camera parameters can be modified in the instance being displayed so as to capture a larger field of view - this can be useful to capture any differences in viewpoint between the instances, so that there is no loss of visual content by not displaying the video output of the second instance. This can be implemented by defining camera parameters so as to capture a field of view that encompasses both of the respective fields of view of the two instances, for example. Similarly, the first instance can adjust its video parameters to increase the resolution or level of detail; this may be considered advantageous as in a typical arrangement the video output would be displayed with a larger size (as it would no longer be being presented in a split-screen manner).

In some implementations, the instance of the application that is no longer having its video output viewed (or is not generating a video output) can be configured to adapt its output accordingly. This can include providing information to the other instance of the application to modify the generation of the video output and/or generating alternative visual content that can be overlaid upon the other output video. For example, in a video game a player's health statistic can be output to enable a corresponding UI element to be generated by the other instance. In some examples, the UI element can be output directly and subsequently overlaid upon the other video output. More specific information can also be used to generate other visual content, such as information about an enemy being targeted by a user of the second (non-displayed) instance to enable a corresponding targeting graphic to be generated in the first instance.

The example process of FIG. 10 addresses management of the visual component of video content. It is understood that the corresponding audio component can be managed in any suitable manner independent of the management of the visual component. For example, the audio associated with each of the instances can still be reproduced locally (particularly if the users have separate audio reproduction means, to avoid audio clash). In some examples, the audio associated with a non-displayed video output can be omitted - in some cases it can be assumed that if the viewpoints are sufficiently similar, then the audio would also be similar and as such include similarly high levels of redundant content. It is also considered that the non-displayed instance can output instance-specific audio elements (such as a low-health warning, or character-specific audio) that can be played alongside, or incorporated into, the audio for the displayed instance.

FIG. 11 depicts an example process 1100 that can be executed in accordance with implementations of the present disclosure. In some examples, the example process 1100 is provided using one or more computer-executable programs executed by one or more computing devices. The example process 1100 of FIG. 11 represents using similarities between instances to gain efficiencies in consumption of resources.

A first instance of an application is executed (1102). For example, the first instance of the application is executed responsive to inputs received from a user of a first input device associated with a local processing device. A second instance of the application is executed (1104). For example, the second instance of the application is executed responsive to inputs received from a user of a second input device associated with the local processing device, wherein at least one of the first instance and the second instance is executed remotely to the local processing device. A similarity value is determined (1106). For example, the similarity value represents a degree of similarity between video outputs associated with each of the instances of the application. In some examples, the similarity value is determined by comparing a first image of a video output of the first instance to a second image of a video output of the second instance. A modification is determined (1108) and is applied (1110). For example, if the similarity value meets the threshold similarity (e.g., exceeds the threshold similarity) one or more modifications are determined (e.g., a video output associated with one of the first instance or the second instance of is not to be displayed, a visual element of the non-displayed video output is included in the displayed video output). A video output responsive to the modification(s) is displayed at a display device associated with the local processing device.

When multiple users interact with respective instances of an application in accordance with the above implementations (e.g., couch co-op), it is considered that the users will have an overlap in the respective videos output by their respective instances. In other words, it is considered that at least some of the time the videos displayed for each user would be similar or at least share a number of common elements, as would their corresponding audio. An example of this is when playing a game - each of the users can proximate to one another in the game environment and, therefore, would be provided with similar video/audio. As another example, when viewing free-viewpoint media content the same scenarios can arise - such as if two users sit next to each other in an immersive sports stadium experience. Even in the case in which users in an environment are not proximate to one another, there can be a number of shared audio elements, such as background music or global sound effects (such as announcements). Audio elements here refer to component parts of the audio, such as sounds associated with a particular sound source.

Reproducing such audio in parallel can be distracting to a user, if, for example, shared audio reproduction hardware is used (such as the speakers associated with a display, rather than using individual headsets or the like). This is particularly problematic if there is a latency between the streams as this can cause the same audio to be presented with a temporal offset. While issues resulting from the reproduction of parallel audio streams can be circumvented by using separate audio reproduction devices (such as each user having a respective pair of headphones), this causes users to be more isolated in the shared environment as they are less able to hear real-world sounds (e.g., ambient sound). It is also considered that the rendering and transmission of duplicated content can be inefficient, placing an unnecessary burden on the system and network. These negative effects are amplified as the number of users increases.

In view of this, implementations of the present disclosure determine similarities between respective audio outputs that are to be played and can modify one or more of the audio outputs to improve resource efficiency of the system and improve user experience.

Implementations can be performed for a range of different arrangements of processing devices, such as those described herein with reference to FIGs. 1A-1E. For example, one or more processing devices described herein can provide a multi-user experience at a local processing device. As noted above, implementations of such a system may be realized with a range of different arrangements of physical processing means (such as CPUs and/or GPUs located in multiple devices). In some examples, a processing device includes a first application processing unit, a second application processing unit, an audio analysis unit, a mixing unit, and an audio reproduction unit.

In some examples, the first application processing unit is configured to execute a first instance of the application responsive to inputs received from the user of a first input device associated with a local processing device. The first application processing unit can be implemented by any suitable arrangement of hardware, such as a CPU and GPU in communication with one another, as can the second application processing unit. In some examples, the second application processing unit is configured to execute a second instance of the application responsive to inputs received from a user of a second input device associated with the local processing device, wherein at least one of the first and second application processing units is remote to the local processing device.

In some examples, the first application processing unit is located at the local processing device and the second application processing unit is located at a remote processing device or a server. In some examples, the first application processing unit is located at a remote processing device or a server, and the second application processing unit is also located at a remote processing device or a server. In the latter case, the functionality of the first and second application processing units can be realized by the same server. As described herein, the first and second application processing units execute separate instances of the same application in a multi-user configuration. As such, the specific locations of the instances are able to be selected freely, while the inputs to both are still received by the local processing device shared by the users.

In some examples, the audio analysis unit is configured to analyze audio outputs associated with each of the instances of the application to identify conflicting audio elements amongst the audio elements associated with each audio output. Conflicting audio elements are those which, when both reproduced, would be considered inefficient due to duplication, would cause auditory discomfort for a listener, and/or would otherwise impair the listening experience. For example, the audio analysis unit can be configured to identify an audio element that is present in both audio outputs as a conflicting audio element. As another example, the audio analysis unit is configured to identify an audio element in an instance of the application that would impair the audibility of an audio element in the other instance of the application as a conflicting audio element. Examples of such conflicting audio elements are discussed above and can include duplicated background music and loud noises during dialogue, and the like.

In some examples, the audio analysis unit can be configured to analyze data output by the respective instances of the application to identify conflicting audio elements, the data being indicative of an application state of the corresponding instance. This can include information, such as the location of a virtual microphone in respective virtual environments (where a similar location between the instances would be indicative of a significant overlap in audio elements in the corresponding audio outputs) and/or information about what is happening in the application - such as the occurrence of an event (which may correspond to a specific audio element) or the start of a cutscene in a game, for example.

Similarly, the audio analysis unit can be configured to analyze video data output by the respective instances of the application to identify conflicting audio elements, the video data being indicative of the content of the audio outputs. In some examples, this can include processing the video directly to identify particular elements or events from which information about an audio output can be derived. In some examples, this can include identifying watermarks or the like in the video content that are inserted to indicate the presence of one or more audio elements or events (such as cutscenes).

For example, the analysis of video can include the identification of events within the content. An example of this is identifying that the score has changed in a sports game (for instance, from a change on the scoreboard), with the presence of a corresponding audio element of a score announcement being inferred from this. The analysis of video can include a comparison between the respective views being presented in each instance of the application, as described herein (e.g., using a ML model, comparing using embeddings). In some examples, if the views are similar, it can be assumed that the users are proximate to one another in a virtual environment and therefore would experience similar audio. It can also be considered that, if both users are presented with a view of the same element, the users are both presented with audio corresponding to that element and duplication of audio can be expected. In some examples, a ML model that has been trained on the specific application (or a group of similar applications) is used. This training can be based on pairs of assets and associated audio elements, for example.

In some examples, the audio analysis unit can be configured to obtain information indicating class and/or identification information for one or more audio elements within an audio output. This can be based on information encoded as a part of the audio and/or metadata associated with the audio and/or video output of the application. For example, an application can be configured to output such information alongside the audio-visual output. In some examples, identification of an audio element can be based on processing of the audio and/or visual content output by the application. For example, a ML model that is trained on that application can be used to process audio content. Once identified, class information can be derived using, for example, a locally stored look-up table or the like.

In some examples, classes of audio elements refers to a type of audio element, typically defined based on how the audio is perceived by a listener and/or how widely-heard the audio is. For example, classes can include 'background music' or 'global sounds', 'near' or 'far' sounds (for example, based upon typical volume), and/or 'user-specific' or 'team-specific' sounds. A single audio element can be associated with multiple classes.

In some examples, the audio analysis unit can be configured to obtain information indicating a relative latency between the first instance and the second instance of the application, and to identify conflicting audio based on the relative latency. This can be advantageous in that it enables conflicts to be identified more readily. For example, if there is a latency between the instances, the audio elements can be reproduced at different times, thereby meaning that duplication of sounds is not identified if latency is not considered. Information about the latency is used to ensure that corresponding times in the respective audio outputs are being compared. For example, audio analysis results at time t for one instance can be compared against the audio analysis results for time t + tₗₐₜ (where tₗₐₜ is a latency) in the other instance.

In some examples, the relative locations of users within a virtual environment of an application can be considered - given the relatively low speed of sound, it can be considered that a latency is introduced due to different listener locations with respect to a sound source. Such a latency can be determined based on information about the spatial arrangement of elements in the application, which can be output by one or both of the instances, or such latency information can be generated by one or both of the instances themselves and output to the audio analysis unit.

In some examples, the audio analysis unit can be configured to operate on the respective audio output streams in any suitable manner. In one example, a circular buffer is maintained for each instance, which includes a most recent portion of the audio output of the corresponding instance. The size of this buffer can be determined freely, although typically a small buffer is used to reduce storage requirements - storing half a second of the audio output of each instance can be sufficient, for example. The contents of these buffers can be compared in a continuous manner to identify any conflicting audio elements.

In some examples, the audio analysis unit is configured to analyze the audio outputs of one or both of the instances of the application, and optionally video and/or application data output by one or both of the instances. This is for the purpose of identifying audio conflicts between the instances - that is, audio that is duplicated or that is incompatible (i.e., the reproduction of an audio element from one instance would impair the user's listening to audio elements associated with the other instance(s)).

In some examples, the mixing unit is configured to generate combined audio representative of the respective audio outputs associated with each of the instances of the application. In some examples, one or more conflicting audio elements are omitted from the combined audio. In some examples, this omission can be a lowering of the volume of the audio element to a significantly lower level, such that a listener is less able to perceive that audio element in the combined audio.

In some examples, the mixing unit can be configured to modify the audio outputs directly to obtain a desired combined audio. In some examples, the mixing unit is configured to cause one or both of the instances of the application to modify their audio outputs in response to identifying conflicting audio elements. This can be, for example, by generating an instruction to one or both instances as appropriate to indicate particular audio elements or classes of audio elements that should be omitted from an audio output - or instructing an instance to cease audio output altogether.

In some examples, the mixing unit can be configured to perform an interpolation process, such that the apparent sound source location associated with a conflicting audio element is changed in the combined audio to be a location between the locations of the audio element in the respective audio outputs of the first and second instances of the application. While this can mean that an audio element is not presented at the correct location for either listener, this can reduce the occurrence of extreme differences between an expected and actual sound source location for the user of an application instance for which the output of an audio element is to be terminated. This interpolation can be performed directly upon the audio should the audio output include spatial information or use a three-dimensional audio format. For example, a three-dimensional location (e.g., [x, y, z] of each audio source within the gaming environment can be used to determine a mid-point location. In some examples, an instance of the application can be caused to modify its generation of audio to reflect the interpolated location (e.g., the mid-point location).

In determining how to handle conflicting audio elements, the mixing unit can be configured to generate combined audio based on a priority associated with an audio element and/or class of audio elements. This can assist in resolving conflicts, as the use of a priority value can indicate which of the conflicting audio elements should be retained. In some examples, in the case that priorities are equal, a particular instance of the application can be regarded as the primary instance for audio purposes - with the audio element from this instance having priority over the audio element of the other instance.

In some examples, audio reproduction unit is configured to output the combined audio. Here, the combined audio is reproduced for listening by the users of the local processing device. This can be performed alongside the display of corresponding video content on one or more display devices associated with the local processing device. The reproduction of audio can be performed utilizing any suitable arrangement of hardware, such as a surround sound system associated with one or more displays or integrated speakers provided as a part of a display device.

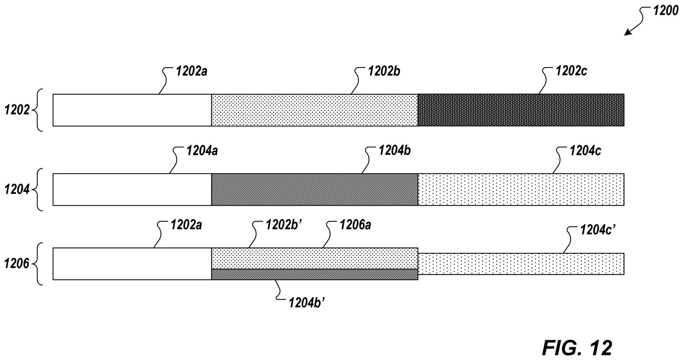

FIG. 12 depicts an example representation 1200 of modifying video output in accordance with implementations of the present disclosure. It is appreciated that the example representation 1200 of FIG. 12 is for purposes of non-limiting illustration and audio output can be modified in various combinations of modification as described herein. In FIG. 12, the example representation 1200 includes a first audio output 1202 of a first instance, a second audio output 1204 of a second instance, and a combined audio output 1206. In the example of FIG. 12, the first audio output 1202 includes audio segments 1202a, 1202b, 1202c, the second audio output 1204 includes audio segments 1204a, 1204b, 1204c, and the combined audio output 1206 includes the audio segment 1202a, an audio segment 1206a, and an audio segment 1204c'.

In some examples, it can be determined that the audio segment 1202a and the audio segment 1204a are identical. Consequently, the audio segment 1202a is used in the combined audio output 1206, the audio segment 1204a being removed (or muted). In some examples, it can be determined that the audio segment 1206a is a combination of the audio segment 1202b and the audio segment 1204b. In the example of FIG. 12, the audio segment 1202b is modified to provide an audio segment 1202b' (e.g., volume lowered, location moved) and the audio segment 1204b is modified to provide an audio segment 1204b' (e.g., volume lowered, location moved). Here, the audio segments 1202b', 1204b' are combined to provide the audio segment 1206a. Also in the example of FIG. 12, it can be determined that the audio segment 1202c and the audio segment 1204c are conflicting and that the audio segment 1204c has a higher priority. In response, it can be determined that the audio segment 1204c is to be used. Here, the audio segment 1204c is modified (e.g., volume lowered, location moved) to provide an audio segment 1204c' that is used in the combined audio output 1206.

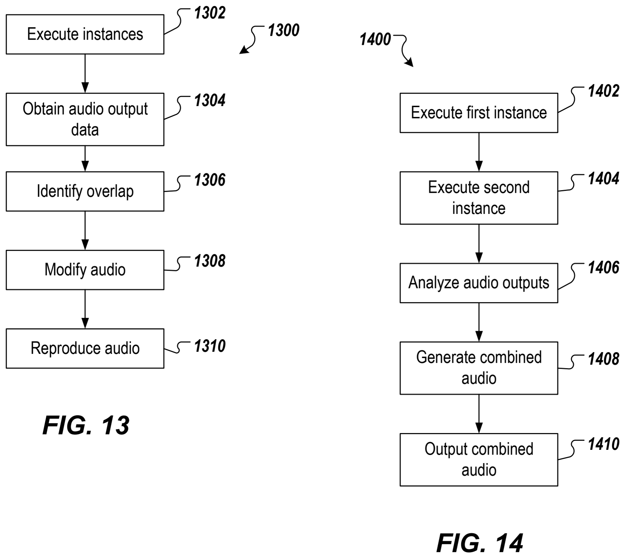

FIG. 13 depicts an example process 1300 that can be executed in accordance with implementations of the present disclosure. In some examples, the example process 1300 is provided using one or more computer-executable programs executed by one or more computing devices. The example process 1300 of FIG. 13 represents deconflicting audio between instances to gain efficiencies in consumption of resources and improve user experience. The example process 1300 of FIG. 13 can be performed by the first or second instance of the application, for example, or by a standalone process that operates independently of the execution of the instances of the application.

A first instance and a second instance of an application are executed (1302). For example, the first instance and the second instance of the application are executed by any suitable devices in accordance with the above discussion. For example, the first instance can be executed at a local processing device with the second instance being executed remotely (such as at a second processing device associated with a second user, or at a server), or both may be executed remotely.

Audio output data is obtained (1304). For example, audio output data is obtained from each of the first instance and the second instance of the application. The audio output can be obtained from a video stream that includes both visual content and audio content, for example, or the audio output data can be obtained from a separate stream to any video content. In some examples, the audio output data can include the audio output itself. In some examples, other data that characterizes the audio output and/or an application state corresponding to the audio output can be obtained. For example, information about the location and orientation of an in-game camera/microphone can be obtained and/or information indicating the start/end of a cutscene. Information representing common elements between the instances' respective audio outputs can also be obtained, such as identifying sound effects that are common between the instances. Example sound effects that are common can include background music, global announcements, and the like. Such other data can be obtained separately to the audio, or it can be encoded as metadata provided with the audio, for example.

One or more overlaps between audio outputs is determined (1306). In some examples, an overlap can be an overlap in content (such that the audio outputs include the same audio elements). In some examples, an overlap can be an overlap in reproduction (such that the audio outputs include different audio elements being provided at the same time). In some examples, two or more overlap types can be identified.

In some examples, any suitable processing or data to enable overlaps to be identified can be used, with the audio itself and/or information about the audio being used as the basis of the processing or the data source. In some examples, latency between the instances can be considered and can include, for example, processing latency, transmission latency, and/or latency that arises due to a simulated speed of sound within a virtual environment in some applications. For example, an apparent audio latency can be identified due to each user in an environment being a different distance from the sound source. In this case, the comparison can be tailored to the identified latency to ensure that the corresponding parts of the audio are being compared. Of course, this latency can vary for different audio elements within the content.

A first example of the processing is that of processing the respective audio outputs directly to identify overlaps. For examples, samples of the audio outputs can be processed to extract features (such as a frequency analysis) that are compared. A subtractive approach can be used, in which a sample of one instance is subtracted from a corresponding sample of the other instance to determine a residual.

In some examples, a sound recognition process can be performed on the audio to identify common elements. This can be performed in a number of different manners. For example, this can include searching both audio outputs for audio elements that would be known to be shared (e.g., global announcements presented to all users independent of location). In some examples, a sound recognition process can be performed on the audio output of one of the instances with the other of the audio outputs being searched for corresponding audio.

In some examples, the instances can directly output information about their respective audio outputs. This can be, for example, a pre-processed representation of the audio output to make a comparison more efficient. In some examples, semantic information that describes or directly identifies audio elements within the audio output can be provided. For example, this can include the output of filenames (and optionally timing information) and/or a type of sound (as different users can have assigned different sounds to the same event - such as having selected different commentator voices or having their application provide announcements in different languages).

In some examples, information output by the instances can also include information about the locations of a virtual microphone in a virtual environment and/or information about the locations of virtual sound sources. Information about these can be used to identify an overlap between the audio in each instance. For example, if two users are standing side-by-side in a virtual environment, it can be assumed that the audio outputs are largely identical. Based upon relative locations, it can be determined whether one user would hear something that the other cannot, or relative sound levels can be determined, based upon a sound propagation model (or at least a rough estimation, for improved efficiency) associated with a given virtual environment. Should a sound source location be above a threshold distance from a user's position in a virtual environment, it can be assumed that the sound is either global (such as an announcement) or sufficiently loud to be heard by both users - and therefore an overlap can be identified on this basis.

In some examples, metadata can be provided with (or encoded as a part of) the audio output, the metadata categorizing one or more of the audio elements present in the audio output. This can be useful for audio elements (sounds) that do not have a particular location in a virtual environment associated with an application, for example. In some examples, categories can respectively indicate whether a sound is 'general' (that is, the sounds of the environment), 'user-specific' (such as audio effects indicating a user having low health), or 'global' (such as background music or announcements). In some examples, sub-categories can be provided (e.g., 'general' can be subdivided into 'near', 'medium distance,' and 'distant').

In some examples, data can indicate the presence of subtitles, either found in the metadata associated with a video stream or identified based on image processing of one or more images (frames) (e.g., in the case of hard-coded subtitles). The presence of subtitles can be indicative of a cutscene, or at least of important audio that should be afforded a high level of priority should a selection of audio elements to reproduce be made. Cutscenes can also be identified separately, such as through metadata output alongside the video content or from the video content itself (such as through a watermark added to indicate the start of a cutscene, or an identification that the instances are outputting identical video content).

Audio is modified (1308). For example, audio that is to be presented to the users at the local processing device can be modified to generate a combined audio output. This can be performed in a number of ways, each of which can be utilized in combination. In some examples, modification can include one or more of modifying the audio output of one or more of the instances, mixing the audio outputs, and/or causing one or more of the application instances to generate a different audio output.

In some examples, modifying the audio output of one or more of the audio instances can include processing to remove or mute common audio elements amongst the audio outputs, for example, or audio elements that are otherwise not to be reproduced in the combined audio output. In some examples, mixing the audio outputs can include combining the audio outputs in a manner that varies the contribution of one or more audio elements of the component audio outputs. This can include reducing the volume of one or more audio elements in the mix, for example, and/or discarding an audio output associated with one of the instances. The mixing can also include an interpolation of one or more of the audio elements where suitable. For example, the sounds themselves can be interpolated to generate a representation that is indicative of sounds associated with each of the instances, or an interpolation can be performed to change an apparent location of a sound source relative to a listener.

In some examples, an interpolation can be performed to generate a combined audio output having an apparent location that is between the locations (such as at a midpoint), in a virtual environment of the application, associated with the respective audio outputs. This can ease a feeling of discomfort that could arise, if sound effects are reproduced with an apparent location relative to the listener that is too far removed from what would be expected.

Causing one or more of the application instances to generate a different audio output can include providing an instruction (or information upon which an instruction is generated by the instance) to the instance to modify its operation in respect of audio generation. This can include a case in which audio output is terminated for an application, or the audio output is a stream including no data (in the case that this aids compatibility with particular streaming formats, for example). In some example, audio elements can be omitted from the audio output. This can be, for example, for particular sounds or categories of sounds (such as 'global announcements'), for example. The omitted audio elements can be those that would appear in both audio outputs, or those that cause a clash with audio elements in other audio outputs.

In some examples, modification can be dependent upon a prioritization system to determine which audio elements should be reproduced in the case of a clash. A clash here can be considered to be any combination of reproduced audio elements that is undesirable. This can include, for example, one audio element obscuring another audio element (e.g., an explosion during dialogue), incompatibility between audio elements (e.g., two different sets of background music), audio elements being considered to be too distinct from one another (e.g., one instance is providing 'fun' sounds while another instance is providing 'scary' sounds), and the like. By assigning a priority value to audio elements and/or classes of audio elements, such conflicts can be resolved in an efficient manner. In the case that a conflict is identified between sounds of equal priority, user preferences can be used to determine how to proceed, or a particular instance of the application can be designated as the 'primary instance' to which other instances defer.

User preferences can be predefined, such as in a user profile indicating which sounds or types of sounds should be prioritized, or this can be performed live. In some example, the predefined preferences are used as the basis for audio reproduction, but can be modified on-the-fly by users. These preferences can be defined with any suitable degree of granularity - such as particular sounds or applications - and can be defined in respect of particular combinations of content/applications/users as desired. In some example, the user or users can be presented with a UI element including a cross-fader style functionality, for example, to enable a fine-tuning of the combined audio output of the instances of the application.

Audio is reproduced (1310). For example, the combined audio is reproduced at the local processing device. This can be by a single display device (and associated audio reproduction elements, such as a surround sound system), or the reproduction can be divided among a number of devices. For example, in the case that multiple displays are provided, it can be the case that audio elements associated with the first instance and both instances are reproduced at one display device, with the second display device reproducing only those audio elements associated with the second instance. In the case that the audio reproduction hardware includes a directional audio output, each of the users can be targeted with their corresponding instance's unique audio, while the shared audio elements are played via non-directional audio reproduction hardware.

FIG. 14 depicts an example process 1400 that can be executed in accordance with implementations of the present disclosure. In some examples, the example process 1400 is provided using one or more computer-executable programs executed by one or more computing devices. The example process 1400 of FIG. 14 represents using similarities between instances to gain efficiencies in consumption of resources.

A first instance of an application is executed (1402). For example, the first instance is executed responsive to inputs received from a user of a first input device associated with a local processing device. A second instance of an application is executed (1404). For example, the second instance is executed responsive to inputs received from a user of a second input device associated with the local processing device, at least one of the first and second application instances being executed remote to the local processing device. Audio outputs are analyzed (1406). For example, audio outputs associated with each of the first instance and the second instance are analyzed to identify conflicting audio elements amongst the audio elements associated with each audio output. A combined audio output is generated (1408). For example, a combined audio output is generated and is representative of the respective first audio output and second audio output. In some examples, one or more conflicting audio elements are omitted from the combined audio. The combined audio is output (1410).

In some implementations, a determination can be made as to which processing device performs one of more modifications (e.g., for synchronization, in response to similarity, combining audio), as described herein. In some examples, the determination can be made based on one or more technical considerations. For example, it can be preferable for the processing to be performed by the device having the most spare processing capacity (typically the more powerful processing device, but this may not be the case when the instances of the application have different display settings or the like). In some examples, it can be preferred that the device that executes the 'primary' instance (e.g., the local processing device) performs the processing - the primary instance here is the one which is associated with the video output that is preserved, with the secondary instance being the one that is associated with the video output and/or the audio output that is not displayed or reproduced when specified conditions are met. The selection can be made based on the amount of latency that would be introduced by each option - with a lowest absolute latency, or a lowest latency between the two instances of the application, being considered desirable.

As discussed above, in some cases it is preferable that a locally executed instance is designated as the primary instance. This can improve transmission efficiency by reducing the amount of data being transmitted with respect to the second instance. In some instances, it can be preferable that the locally executed instance is designated as the secondary instance. This can reduce a processing burden upon the local processing device, which can lead to improved performance overall (as the primary instance may have higher quality video output if the other device/server has a higher processing capability) as well as preserving the battery life in the case that the local processing device is a portable device, for example.

FIG. 15 shows an example of a computing device 1500 and associated accessories that can be employed to execute implementations of the present disclosure. The computing device 1500 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 1500 can form at least a portion of a gaming system that can include one or more remote computing devices such as ones implementing a cloud-based portal or gaming platform.

In various implementations, the computing device 1500 includes some combination of one or more processors or central processing units (CPUs) 1502, one or more graphic processing units (GPUs) 1503, memory 1504, one or more storage devices 1506, a high-speed interface 1508, and/or a low-speed interface 1512. In some implementations, the high-speed interface 1508 connects to the memory 1504 and multiple high-speed expansion ports 1510. In some implementations, the low-speed interface 1512 connects to a low-speed expansion port 1514 and the storage device 1504. In some implementations, the high-speed interface 1508 connects to the storage device 1504. Each of the processor 1502, the GPU 1503, the memory 1504, the storage device 1506, the high-speed interface 1508, the high-speed expansion ports 1510, and the low-speed interface 1512, are interconnected using various buses, and may be mounted on a common motherboard or in other manners as appropriate. The processor 1502 can process instructions for execution within the computing device 1500, including instructions stored in the memory 1504 and/or on the storage device 1506 to display graphical information for a graphical user interface (GUI) on an external input/output device, such as a display 1516 coupled to the high-speed interface 1508. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 1504 stores information within the computing device 1500. In some implementations, the memory 1504 is a volatile memory unit or units. In some implementations, the memory 1504 is a non-volatile memory unit or units. The memory 1504 may also be another form of a computer-readable medium, such as a magnetic or optical disk. In some implementations, the memory 1504 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 1506 is capable of providing mass storage for the computing device 1500. In some implementations, the storage device 1506 may be or include a computer-readable medium, such as a hard disk device, an optical disk device, a flash memory, or other similar solid-state memory device, or an array of devices, including devices in a storage area network or other configurations. In some implementations, the storage device 1506 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 1506 can be configured to support expandable storage via compatible non-volatile memory express (NVMe) SSDs. Instructions can be stored in an information carrier, and when executed by one or more processing devices, such as processor 1502, perform one or more methods, such as those described above. The instructions can also be stored by one or more storage devices, such as non-transitory computer-readable or machine-readable mediums, such as the memory 1504, the storage device 1506, or memory on the processor 1502. The instructions can constitute software for providing interactive game play on a user interface such as a graphical user interface (GUI) presented on the display 1516.

The high-speed interface 1508 manages bandwidth-intensive operations for the computing device 1500, while the low-speed interface 1512 manages lower bandwidth-intensive operations. Such allocation of functions is an example only. In some implementations, the high-speed interface 1508 is coupled to the memory 1504, the display 1516 (e.g., through a graphics processor or accelerator), and to the high-speed expansion ports 1510, which may accept various expansion cards. In the implementation, the low-speed interface 1512 is coupled to the storage device 1506 and the low-speed expansion port 1514. The low-speed expansion port 1514, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 1550 such as a DualSense^{®}, DualShock^{®}, or Access^{™} controllers for PlayStation^{®} devices, a virtual reality (VR) or augmented reality (AR) headset 1552 such as the PS VR2 headset, accessory controllers 1554 such as PS VR2 Sense^{™}, a handheld gaming device 1556 such as PlayStation Portal^{®}, a camera 1558, and/or an earphone/headphone set 1560 such as the PULSE Elite^{™} headset or the Pulse Explore^{™} earbuds. In some implementations, the computing device 1500 includes one or more acoustic transducers, and/or is connected to one or more external acoustic transducers such as one or more speakers associated with the display 1516.

The computing device 1500 may be implemented in a number of different forms, as shown in the FIG. 15. For example, the computing device 1500 may be implemented as a gaming console 1520, or as one or more servers 1524 or as a rack within a server. In some implementations, the computing device 1500 may be implemented as a personal computer such as a laptop computer 1522. In some implementations, the computing device 1500 can be implemented as a mobile device such as the connected handheld gaming device 1556. In some implementations, a computing device can include one or more of the computing device 1500, and an entire system may be made up of multiple computing devices communicating with each other. For example, a gaming system can include one or more of a gaming console 1520, one or more accessories, and a remote platform such as a cloud-based platform implemented on one or more servers 1524.

The processor 1502 can be implemented as a chipset of chips that include separate and multiple analog and digital processors. For example, the processor 1502 can be a multi-core processor that supports high-speed processing and enables complex computational tasks, real-time physics simulations, and advanced artificial intelligence (AI) capabilities. In one example, the processor 1502 includes at least 8 cores, at least 16 threads, and operates at variable frequencies around 3.5 GHz or more. In some implementations, the processor 1502 may be a Complex Instruction Set Computers (CISC) processor, a Reduced Instruction Set Computer (RISC) processor, or a Minimal Instruction Set Computer (MISC) processor.

In some implementations, the GPU 1503 includes a custom GPU that supports an advanced architecture such as the RDNA 2 architecture developed by AMD. In one example, the GPU 1503 includes at least 36 compute units running at speeds of 2 GHz or more, and delivers performance of at least 10 teraflops. The GPU 1503 can be configured to support high quality graphics rendering. For example, the GPU 1503 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 1550-e.g., a DualSense^{®}, DualShock^{®}, or Access^{™} controller for PlayStation^{®} devices-to provide the gaming experience. In some implementations, the controller 1550 features a high-fidelity haptic feedback system with one or more actuators that simulate a wide range of tactile sensations. In some implementations the controller 1550 includes one or more adaptive triggers that adjust resistance based on in-game actions to provide for a realistic feel. The ergonomic design of the controller 1550 can be configured to allow for comfortable use even in long gaming sessions. For example, the controller 1550 can include textured grips and an optimized button layout. In some implementations, the controller 1550 includes one or more of: integrated motion sensors, a high-resolution touchpad, and a built-in microphone array. The controller 1550 includes an array of buttons, joysticks, and other controls that allow a user to interact with the computing device 1500 to participate in interactive gameplay presented, for example, on a display device such as the display 1516. The controller 1550 can be powered by one or more regular or rechargeable batteries and supports both wireless and wired connectivity with the computing device 1500, for example, via Bluetooth, WiFi, USB-C etc., or via a proprietary connection such as PlayStation Link^{™}. In some implementations, the controller 1550 includes a light bar and player indicators for visual feedback and customization.

In some implementations, the input/output or accessory device includes a VR/AR headset 1552. One example of such a headset is the PlayStation VR2 (PS VR2) headset that is configured to provide an immersive and interactive gaming experience. In some implementations, the headset 1552 features dual organic light emitting device (OLED) displays with a combined resolution of 4000 x 2080 pixels-thus providing sharp visuals and a wide field of view. In some implementations, the VR/AR headset 1552 includes advanced eye-tracking technology that enables foveated rendering, optimizing performance by focusing on where the user is looking. In some implementations, the headset 1552 includes integrated cameras that facilitate tracking head movements without external sensors. In some implementations, the headset includes haptic feedback for tactile sensations and/or one or more acoustic transducers configured to provide a spatial sound effect the user. The headset 1552 can include an adjustable headband and cushioned padding, and can be configured to connect to the computing device 1500 either over a wireless network (e.g., over a WiFi^{®} or Bluetooth^{®} connection, or a proprietary connection such as PlayStation Link^{™}) or over a wire such as a USB-C cable.

In some implementations, the headset 1552 can be configured to work in conjunction with one or more accessory controllers 1554 such as the PlayStation VR2 Sense^{™} controllers. The accessory controllers 1554 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 1554 can be configured to provide a comfortable experience even during extended gameplay. In some implementations, the accessory controllers include one or more integrated sensors (accelerometer, gyroscope, etc.) and cameras to provide motion tracking. The accessory controllers 1554 can be configured to connect to the computing device 1500 and/or the headset 1552 over a wireless connection such as WiFi^{®} or Bluetooth^{®}.

In some implementations, the computing device 1500 can be connected to a handheld gaming device 1556 such as the PlayStation Portal^{®}. The handheld gaming device 1556 can be configured to stream games and media from the computing device 1500 via a wireless connection such as WiFi^{®} or Bluetooth^{®}. The handheld gaming device 1556 includes a high-resolution screen that allows users to play games and/or stream media remotely without using the display 1516 connected to the computing device 1500. This allows the display to be used for other purposes while the computing device 1500 facilitates gameplay on the handheld gaming device 1556. In some implementations, the handheld gaming device 1556 is configured to act as a streaming receiver without running games natively on the device 1556 itself. This makes the handheld gaming device 1556 a convenient option for playing games run on the computing device 1500, while leaving a TV connected to the computing device 1500 free to be used for viewing other media. The handheld gaming device 1556 can includes buttons and features similar to (or even same as) the controller 1550, thus providing for a similar gaming experience as that with the controller 1550.

In some implementations, the input/output or accessory devices can include a camera 1558 and/or an earphone/headphone set 1560 such as the PULSE Elite^{™} headset or the Pulse Explore^{™} earbuds. The camera 1558 can be used to track user-movements, which in turn can be used as an input to an interactive game being executed on the computing device 1500. The earphone/headphone set 1560 can be used to provide audio feedback/output to a user from the computing device 1500. In some implementations, the earphone/headphone set 1560 can include a microphone configured to receive spoken inputs/instructions that in turn can be used to control an interactive game being executed on the computing device 1500.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claim may be directed to a sub-combination or variation of a sub-combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

### EMBODIMENTS

Although the present invention is defined in the claims, it should be understood that the present invention can also (alternatively) be defined in accordance with the following embodiments:
1. A method for resource-efficient execution of multiple instances of an application, a first instance executed on a local processing device and a second instance executing on a remote processing device for presentation using the local processing device, the method comprising:
   executing the first instance responsive to first input received from a first input device associated with the local processing device, the second instance being responsive to second input received from a second input device associated with the local processing device;
   determining a first degree of similarity between a first video output of the first instance and a second video output of the second instance; and
   determining that the first degree of similarity meets or exceeds a threshold degree of similarity and, and at least partially in response, implementing one or more modifications, a first modification comprising:
      ceasing, by the local processing device, display of one of the first video output and the second video output, and
      displaying, by the local processing device, another of the first video output and the second video output.
2. The method of embodiment 1, wherein the first degree of similarity is determined by at least one of:
   comparing image frames of the first video output and the second video output, respectively, the image frames comprising pairs of image frames associated with aligned timestamps of each of the first video output and the second video output;
   using information output by each of the first instance and the second instance, the information being indicative of one or more in-application parameters; and
   using metadata associated with one or more of the first video output and the second video output, the metadata being indicative of content of the first video output and the second video output, respectively.
3. The method of embodiment 1, wherein the one or more modifications are implemented further in response to the first degree of similarity meeting or exceeding a threshold degree of similarity for at least a predetermined period of time.
4. The method of embodiment 1, wherein a second modification comprises overlaying one or more elements of one of the first video output and the second video output for display in another of the first video output and the second video output.
5. The method of embodiment 4, wherein the first video output is displayed and the second video output ceases to be displayed in response to the first modification and the one or more elements comprise an element of the second video output that is displayed in the first video output.
6. The method of embodiment 1, wherein a second modification comprises one or more of rescaling and up-sampling of one of the first video output and the second video output.
7. The method of embodiment 1, further comprising, after implementing the first modification:
   determining a second degree of similarity between the first video output of the first instance and the second video output of the second instance; and
   determining that the second degree of similarity is less than the threshold degree of similarity and, and at least partially in response:
      displaying, by the local processing device, the first video output and the second video output.
8. The method of embodiment 1, wherein the threshold degree of similarity is determined based on content of one or more of the first video outputs and the second video outputs.
9. The method of embodiment 1, further comprising identifying one or more conflicting audio elements between a first audio output of the first instance and a second audio output of the second instance and, in response:
   providing a combined audio output by modifying one or more of the one or more conflicting audio elements; and
   playing, by the local processing device, the combined audio output.
10. The method of embodiment 9, wherein modifying one or more of the one or more conflicting audio elements comprises one or more of:
   removing a conflicting audio element from one of the first audio output and the second audio output;
   adjusting a volume of a conflicting audio element in one or more of the first audio output and the second audio output; and
   adjusting a location of a source of the conflicting audio element within an environment of the application represented in the combined audio output.
11. The method of embodiment 9, wherein the combined audio output is generated based on respective priorities associated with each of two or more conflicting audio elements.
12. A non-transitory computer-readable storage medium coupled to one or more processors and having instructions stored thereon which, when executed by the one or more processors, cause the one or more processors to perform operations for resource-efficient execution of multiple instances of an application, a first instance executed on a local processing device and a second instance executing on a remote processing device for presentation using the local processing device, the operations comprising:
   executing the first instance responsive to first input received from a first input device associated with the local processing device, the second instance being responsive to second input received from a second input device associated with the local processing device;
   determining a first degree of similarity between a first video output of the first instance and a second video output of the second instance; and
   determining that the first degree of similarity meets or exceeds a threshold degree of similarity and, and at least partially in response, implementing one or more modifications, a first modification comprising:
      ceasing, by the local processing device, display of one of the first video output and the second video output, and
      displaying, by the local processing device, another of the first video output and the second video output.
13. The non-transitory computer-readable storage medium of embodiment 12, wherein the first degree of similarity is determined by at least one of:
   comparing image frames of the first video output and the second video output, respectively, the image frames comprising pairs of image frames associated with aligned timestamps of each of the first video output and the second video output;
   using information output by each of the first instance and the second instance, the information being indicative of one or more in-application parameters; and
   using metadata associated with one or more of the first video output and the second video output, the metadata being indicative of content of the first video output and the second video output, respectively.
14. The non-transitory computer-readable storage medium of embodiment 12, wherein the one or more modifications are implemented further in response to the first degree of similarity meeting or exceeding a threshold degree of similarity for at least a predetermined period of time.
15. The non-transitory computer-readable storage medium of embodiment 12, wherein a second modification comprises overlaying one or more elements of one of the first video output and the second video output for display in another of the first video output and the second video output.
16. The non-transitory computer-readable storage medium of embodiment 15, wherein the first video output is displayed and the second video output ceases to be displayed in response to the first modification and the one or more elements comprise an element of the second video output that is displayed in the first video output.
17. A system, comprising:
   a local processing device executing a first instance of an application; and
   a computer-readable storage device coupled to the local processing device and having instructions stored thereon which, when executed by the computing device, cause the computing device to perform operations for resource-efficient execution of multiple instances of the application, a second instance executed on a remote processing device for presentation using the local processing device, the operations comprising:
      executing the first instance responsive to first input received from a first input device associated with the local processing device, the second instance being responsive to second input received from a second input device associated with the local processing device,
      determining a first degree of similarity between a first video output of the first instance and a second video output of the second instance, and
      determining that the first degree of similarity meets or exceeds a threshold degree of similarity and, and at least partially in response, implementing one or more modifications, a first modification comprising:
         ceasing, by the local processing device, display of one of the first video output and the second video output, and
         displaying, by the local processing device, another of the first video output and the second video output.
18. The system of embodiment 17, wherein the first degree of similarity is determined by at least one of:
   comparing image frames of the first video output and the second video output, respectively, the image frames comprising pairs of image frames associated with aligned timestamps of each of the first video output and the second video output;
   using information output by each of the first instance and the second instance, the information being indicative of one or more in-application parameters; and
   using metadata associated with one or more of the first video output and the second video output, the metadata being indicative of content of the first video output and the second video output, respectively.
19. The system of embodiment 17, wherein the one or more modifications are implemented further in response to the first degree of similarity meeting or exceeding a threshold degree of similarity for at least a predetermined period of time.
20. The system of embodiment 17, wherein a second modification comprises overlaying one or more elements of one of the first video output and the second video output for display in another of the first video output and the second video output.

## Claims

1. A method for resource-efficient execution of multiple instances of an application, a first instance (106) executed on a local processing device (102) and a second instance (106') executing on a remote processing device (102') for presentation using the local processing device (102), the method comprising:
executing (1102) the first instance (106) responsive to first input received from a first input device associated with the local processing device (102), the second instance (106') being responsive to second input received from a second input device associated with the local processing device (102);
determining (1106) a first degree of similarity between a first video output of the first instance (106) and a second video output of the second instance (106'); and
determining that the first degree of similarity meets or exceeds a threshold degree of similarity and, and at least partially in response, implementing (1110) one or more modifications, a first modification comprising:
ceasing, by the local processing device (102), display of one of the first video output and the second video output, and
displaying, by the local processing device (102), another of the first video output and the second video output.

2. The method of claim 1, wherein the first degree of similarity is determined by at least one of:
comparing image frames of the first video output and the second video output, respectively, the image frames comprising pairs of image frames associated with aligned timestamps of each of the first video output and the second video output;
using information output by each of the first instance (106) and the second instance (106'), the information being indicative of one or more in-application parameters; and
using metadata associated with one or more of the first video output and the second video output, the metadata being indicative of content of the first video output and the second video output, respectively.

3. The method of claim 1 or claim 2, wherein the one or more modifications are implemented further in response to the first degree of similarity meeting or exceeding a threshold degree of similarity for at least a predetermined period of time.

4. The method of any one of claims 1 to 3, wherein a second modification comprises overlaying one or more elements of one of the first video output and the second video output for display in another of the first video output and the second video output.

5. The method of claim 4, wherein the first video output is displayed and the second video output ceases to be displayed in response to the first modification and the one or more elements comprise an element of the second video output that is displayed in the first video output.

6. The method of any one of claims 1 to 5, wherein a second modification comprises one or more of rescaling and up-sampling of one of the first video output and the second video output.

7. The method of any one of claims 1 to 6, further comprising, after implementing the first modification:
determining a second degree of similarity between the first video output of the first instance (106) and the second video output of the second instance (106'); and
determining that the second degree of similarity is less than the threshold degree of similarity and, and at least partially in response:
displaying, by the local processing device (102), the first video output and the second video output.

8. The method of any one of claims 1 to 7, wherein the threshold degree of similarity is determined based on content of one or more of the first video outputs and the second video outputs.

9. The method of any one of claims 1 to 8, further comprising identifying one or more conflicting audio elements between a first audio output of the first instance (106) and a second audio output of the second instance (106') and, in response:
providing a combined audio output by modifying one or more of the one or more conflicting audio elements; and
playing, by the local processing device (102), the combined audio output.

10. The method of claim 9, wherein modifying one or more of the one or more conflicting audio elements comprises one or more of:
removing a conflicting audio element from one of the first audio output and the second audio output;
adjusting a volume of a conflicting audio element in one or more of the first audio output and the second audio output; and
adjusting a location of a source of the conflicting audio element within an environment of the application represented in the combined audio output.

11. The method of claim 9, wherein the combined audio output is generated based on respective priorities associated with each of two or more conflicting audio elements.

12. A non-transitory computer-readable storage medium coupled to one or more processors and having instructions stored thereon which, when executed by the one or more processors, cause the one or more processors to perform operations for resource-efficient execution of multiple instances of an application, a first instance (106) executed on a local processing device (102) and a second instance (106') executing on a remote processing device (102') for presentation using the local processing device (102), the operations comprising the method of any one of claims 1 to 11.

13. A system, comprising:
a local processing device (102) executing a first instance (106) of an application; and
a computer-readable storage device coupled to the local processing device (102) and having instructions stored thereon which, when executed by the local processing device, cause the local processing device to perform operations for resource-efficient execution of multiple instances of the application, a second instance (106') executed on a remote processing device (102') for presentation using the local processing device (102), the operations comprising the method of any one of claims 1 to 11.
